# EUROPÄISCHE PATENTSCHRIFT

(11) **EP 3 559 923 B1**
(45) Veröffentlichungstag und Bekanntmachung des Hinweises auf die Patenterteilung: **13.09.2023**
(21) Anmeldenummer: 17822688.2
(22) Anmeldetag: 22.12.2017
(51) Int. Cl.: G08C 17/02, H05B 47/19

(54) **STEUERN VON WENIGSTENS EINER IN EINEM DURCH EINE LEUCHTEINRICHTUNG VORGEGEBENEN BEREICH ANGEORDNETEN STEUERBAREN VORRICHTUNG**
CONTROLLING AT LEAST ONE CONTROLLABLE DEVICE ARRANGED IN A REGION PREDEFINED BY A LIGHTING DEVICE
COMMANDE D'AU MOINS UN DISPOSITIF COMMANDABLE DISPOSÉ DANS UNE ZONE PRÉDÉTERMINÉE PAR UN DISPOSITIF D'ÉCLAIRAGE

(30) Priorität: 23.12.2016 DE 102016125661
(43) Veröffentlichungstag der Anmeldung: 30.10.2019
(73) Patentinhaber: OSRAM GmbH, 80807 München (DE)
(72) Erfinder: PEITZ, Christoph, 59556 Lippstadt (DE); FEIL, Henry, Unterhaching 82008 (DE); ZAGGL, Andreas, 80799 München (DE); WALLWITZ, Karl-Heinz, 13355 Berlin (DE)
(74) Vertreter: Scheele Jaeger Wetzel Patentanwälte
(86) Internationale Anmeldenummer: PCT/EP2017/084367
(87) Internationale Veröffentlichungsnummer: WO 2018/115433

(56) Entgegenhaltungen:
- WO-A1-2016/056540
- US-A1- 2002 197 963
- US-A1- 2014 106 735
- US-A1- 2016 345 414

## Beschreibung

Die Erfindung betrifft ein Verfahren zum Steuern von wenigstens einer in einem vorgegebenen Bereich angeordneten steuerbaren Vorrichtung mittels eines Kommunikationsendgerätes, wobei eine Sendeeinrichtung ein Funksignal mit für die Sendeeinrichtung spezifischen Identifikationsdaten drahtlos aussendet. Darüber hinaus betrifft die Erfindung ein System zum Steuern von wenigstens einer in einem vorgegebenen Bereich angeordneten steuerbaren Vorrichtung.

Verfahren und Systeme der gattungsgemäßen Art sowie auch Leuchteinrichtungen und Sendeeinrichtungen der gattungsgemäßen Art sind dem Grunde nach im Stand der Technik umfänglich bekannt, sodass es eines gesonderten druckschriftlichen Nachweises hierfür nicht bedarf. Mit Leuchteinrichtungen werden Räume, beispielsweise außerhalb oder auch innerhalb von Gebäuden, in vorgebbarer Weise ausgeleuchtet, um eine bestimmungsgemäße Nutzung zu ermöglichen oder zu unterstützen. Für die Leuchteinrichtungen werden zunehmend Leuchteinrichtungen eingesetzt, die neben einem Leuchtmittel, das in vorgebbarer Weise Licht abgibt, auch eine Sendeeinrichtung aufweisen, die zumindest dazu ausgebildet ist, die spezifischen Identifikationdaten drahtlos auszusenden, beispielsweise nach Art von Rundfunk. Vorzugsweise ist diese Sendeeinrichtung dazu ausgebildet, das Funksignal nach Art von Nahfunk auszusenden. Zum Aussenden des Funksignals kann ein Funk-Standard, wie zum Beispiel Bluetooth, WiFi, ZigBee oder dergleichen, genutzt werden. Eine derartige Sendeeinrichtung wird im Stand der Technik auch als "Beacon" bezeichnet.

Sogenannte Beacons können mit Leuchteinrichtungen kombiniert werden, um leuchtenspezifische oder auch andere Informationen mittels ihres Signals bereitzustellen. Die Beacon-Technologie basiert auf einem Sendersystem beziehungsweise auch einem Sender-Empfänger-System. Ein Beacon (zu Deutsch auch Leuchtfeuer, Bake oder Peilsender) ist ein kleiner, meist batteriebetriebener Sender, der ein Signal in, vorzugsweise definierbaren, Zeitintervallen aussendet, beispielsweise basierend auf einem Bluetooth-Low-Energy-Standard (BLE). Das Signal eines Beacon zeichnet sich durch die spezifischen Identifikationsdaten aus, die beispielsweise eine einmalige Identifikationsnummer, englisch zum Beispiel universally unic identifier (UUID) genannt, umfasst. Beacons können dazu verwendet werden, Objekten und/oder Orten eine, insbesondere digitale, Identifikation zuzuordnen. Objekten, an denen ein Beacon installiert ist, sowie auch Orte, an denen ein Beacon, zum Beispiel an einer Wand oder einer Decke, installiert ist, können auf diese Weise von Kommunikationsendgeräten, beispielsweise Smartphones, Laptops und/oder dergleichen, im Signalfeld des Beacon identifiziert werden.

Mit Hilfe eines Beacon kann dadurch zum Beispiel ein Ort identifiziert werden beziehungsweise eine Ortung durchgeführt werden. Durch Anordnung von einem oder mehreren Beacons in einem vorgegebenen Bereich, beispielsweise einem Gebäudebereich oder dergleichen, kann eine Art funkbasiertes Raster bereitgestellt werden, dass es einem sich in dem Bereich befindlichen Kommunikationsendgerät mittels seiner Funkschnittstelle, insbesondere BLE-Schnittstelle, sowie entsprechenden Auswertemöglichkeiten erlaubt, die eigene Position zu ermitteln. Die spezifischen Identifikationsdaten der installierten Beacons geben einem Ort dabei eine Kennung, anhand der das Kommunikationsendgerät, zumindest näherungsweise, die Position bestimmen kann. Grundsätzlich kann jedenfalls ein Sendebereich eines jeweiligen Beacon ermittelt werden. Durch geeignete Auswertung, beispielsweise unter Nutzung vorgegebener Algorithmen oder dergleichen, kann die Genauigkeit der ermittelten Position, beispielsweise unter Auswerten einer Signalstärke und/oder dergleichen, verbessert werden. Vorzugsweise kann das Kommunikationsendgerät hierfür auf Daten eines Datenspeichers zugreifen, zum Beispiel über ein Kommunikationsnetzwerk wie dem Internet und/oder dergleichen. Der Datenspeicher kann beispielsweise ein Cloud-Server oder dergleichen sein. Hier können zum Beispiel die Identifikationsdaten und eine zugeordnete Position in einer Karte vermerkt sein. Der Datenspeicher kann aber auch zumindest teilweise auf dem Kommunikationsendgerät vorhanden sein.

Kommt das Kommunikationsendgerät in die Reichweite der Sendeeinrichtung beziehungsweise des Beacon, kann es anhand der ermittelten spezifischen Identifikationsdaten somit beispielsweise über eine Serverabfrage den eigenen Standort ermitteln. Unter Nutzung weiterer Signale von weiteren Sendeeinrichtungen beziehungsweise Beacons kann mittels Ortungsalgorithmen die Genauigkeit verbessert werden, insbesondere kann aus einer Empfangsfeldstärke des jeweiligen Signals der Sendeeinrichtung beziehungsweise des Beacon ein Abstand ermittelt werden.

Grundsätzlich können in der Lichttechnik bei Leuchteinrichtungen der gattungsgemäßen Art Sendeeinrichtungen beziehungsweise Beacons installiert sein. Dabei kann insbesondere der Vorteil genutzt werden, dass eine Lichtinstallation einen permanenten Energiezugang bereitstellen kann, um die Sendeeinrichtung beziehungsweise den Beacon mit elektrischer Energie zu versorgen. Daraus ergibt sich ein Vorteil, nämlich dass die Sendeeinrichtung beziehungsweise der Beacon keine eigene Energieversorgung in Form einer Batterie benötigt und somit entsprechender Wartungsaufwand eingespart werden kann. Darüber hinaus erlaubt es diese Ausgestaltung, dass auch Einstellungen der Sendeeinrichtung beziehungsweise des Beacon gewählt werden können, die einen hohen Energieverbrauch zur Folge haben, ohne dass dies Auswirkungen auf eine Lebensdauer des Beacon zu haben braucht. Darüber hinaus können Installationsprozesse von derartigen Sendeeinrichtungen beziehungsweise Beacons und der Lichttechnik vereinheitlicht werden.

Ein weiterer Vorteil ist eine definierte Arretierungsposition der Sendeeinrichtung beziehungsweise des Beacon, die vorzugsweise derart gewählt ist, dass die Sendeeinrichtung beziehungsweise der Beacon vor Manipulation geschützt ist. Dadurch kann einem Ort somit eine zuverlässig sichere Kennung zugeordnet werden.

Ein Überblick über Nutzungspotenziale der Integration einer Sendeeinrichtung beziehungsweise eines Beacon in eine Leuchteinrichtung kann folgender Aufzählung entnommen werden:
- Es kann die Energieversorgung der Lichtinstallation anstelle einer Energieversorgung durch eine Batterie genutzt werden, um zum Beispiel Lebenszykluskosten der Sendeeinrichtung beziehungsweise des Beacon zu reduzieren.
- Die elektrische Energieversorgung der Leuchteinrichtung kann genutzt werden, um Sendeparameter des Signals der Sendeeinrichtung beziehungsweise des Beacon an einen Dienst und nicht an eine verfügbare Restenergiemenge beziehungsweise Parameter der Batterie anzupassen. Beispielsweise erzeugen häufige Sendezyklen eine hohe Genauigkeit eines jeweiligen Dienstes, jedoch führt dies auch zu einem erhöhten Energieverbrauch.
- Der Austausch der Batterie konventioneller Sendeeinrichtungen beziehungsweise Beacons birgt Risiken, nämlich beispielsweise im Hinblick auf Fehler bei der Handhabung.
- Eine Nicht-Verfügbarkeit von Diensten kann durch eine unterbrechungsfreie Energieversorgung der Sendeeinrichtung beziehungsweise des Beacon vermieden werden.
- Ein Installationsort unterhalb einer Decke kann vorteilhaft für eine Signalausbreitung des Signals der Sendeeinrichtung beziehungsweise des Beacon sein.
- Ein Installationsort unterhalb der Decke kann das Gesamtsystem robuster gegen Störungen beziehungsweise Abschattungen durch andere Objekte auf Höhe einer Flurebene im Gegensatz zu einer Installation der Sendeeinrichtung beziehungsweise des Beacon selbst auf Höhe der Flurebene machen.
- Die Sendeeinrichtung beziehungsweise der Beacon kann vor Manipulationen beziehungsweise Fremdzugriffen, ob versehentlich oder mutwillig, geschützt werden.
- Ein System sowie auch Dienste wie zum Beispiel Ortungsdienste oder dergleichen können als Gesamtsystem "aus einer Hand" angeboten werden.
- Es besteht darüber hinaus die Möglichkeit zur Nutzung eines sicheren Kommunikationsnetzwerkes des Systems, um beispielsweise die Sendeeinrichtung beziehungsweise den Beacon zu konfigurieren oder die Sendeeinrichtungen beziehungsweise die Beacons untereinander zu vernetzen.
- Eine Vereinheitlichung von Installationsprozessen von Sendeeinrichtungen beziehungsweise Beacons und dem System kann ermöglicht werden.
- Weiterhin besteht die Möglichkeit zur Kopplung zu weiteren Systemelementen einer peripheren Gebäudeinfrastruktur, insbesondere steuerbaren Vorrichtungen, über das Kommunikationsnetzwerk des Systems, zum Beispiel zu Elementen der Sicherheitstechnik oder dergleichen.
- Es kann ein optisch ansprechendes System bereitgestellt werden, da die Sendeeinrichtung beziehungsweise der Beacon nicht sichtbar in der jeweiligen Leuchteinrichtung beziehungsweise im System angeordnet sein kann.

Ein Beacon kann als Sendeeinrichtung in eine Leuchteinrichtung eines Systems integriert sein. Das System kann eine Mehrzahl von Leuchteinrichtungen umfassen. Die Leuchteinrichtung umfasst neben dem Beacon ein oder mehrere Leuchtmittel, die die gewünschte Beleuchtungsfunktion bereitstellen. Der Beacon und die Leuchteinrichtung stehen vorzugsweise in Kommunikationsverbindung miteinander. Der Beacon ist vorzugsweise in die Leuchteinrichtung integriert angeordnet. Es braucht also für den Beacon kein separates Gehäuse vorgesehen zu werden. Dadurch kann der Beacon zugleich geschützt angeordnet werden, so dass die bestimmungsgemäße Funktion mit hoher Zuverlässigkeit bereitgestellt werden kann. Weitere Leuchteinrichtungen des Systems sind vorzugsweise identisch zur Leuchteinrichtung ausgebildet.

Der Beacon ist ausgebildet, ein Signal, nämlich das Funksignal, mit für den Beacon spezifischen Identifikationsdaten drahtlos auszusenden. Vorzugsweise erfolgt die Aussendung per Funk unter Nutzung eines BLE-Standards. Der Beacon umfasst vorzugsweise ferner eine Steuereinheit, die eine Rechnereinheit sowie eine Speichereinheit umfasst. In der Speichereinheit ist ein ablauffähiges Rechnerprogramm gespeichert, welches für die Rechnereinheit bereitsteht, so dass mittels der Rechnereinheit eine vorgegebene Steuerfunktion erreicht werden kann.

Der Beacon kann ferner über eine Kommunikationsverbindung an weitere lokale Beacons angeschlossen sein. Die Kommunikationsverbindung ist vorzugsweise ebenfalls als drahtlose Kommunikationsverbindung, insbesondere nach dem BLE-Standard, ausgebildet. Sie kann aber auch zumindest teilweise leitungsgebunden sein. Die Kommunikationsverbindung zwischen dem Beacon und den weiteren Beacons ist zum Beispiel bidirektional. Sie kann aber auch zumindest teilweise unidirektional sein.

Darüber hinaus kann der Beacon über eine weitere Kommunikationsverbindung an eine Dateninfrastruktureinrichtung angeschlossen sein. Die Dateninfrastruktureinrichtung kann der Steuerung des Systems, hier insbesondere der Leuchteinrichtungen des Systems, dienen. Die Infrastruktureinrichtung kann zum Beispiel das Internet oder aber auch ein zentraler Dienste-Server sein. Die Dateninfrastruktureinrichtung kann ferner zur Steuerung und/oder Übermittlung von Daten dienen. Der lokale Beacon der Leuchteinrichtung kann als reine Sendeeinrichtung nach Art eines Rundfunkbetriebs oder auch als kombinierte Sende-Empfangs-Einrichtung ausgebildet sein.

Das Signal des Beacon kann mittels Kommunikationsendgeräten, wie zum Beispiel ein Smartphone, ein LAPTOP und/oder dergleichen, empfangen werden.

Gemäß einem Nutzungsbeispiel können Nutzer beziehungsweise Geräte gegebenenfalls die Herausforderung haben, sich innerhalb eines Bereichs orientieren zu müssen, navigieren oder andere lokale digitale Dienste auffinden beziehungsweise nutzen zu wollen, wie zum Beispiel Apps, App-Funktionen, Google-Maps, Lightify, Lichtsteuerung und/oder dergleichen. Das System mit integrierten Beacons in einem vorgegebenen Bereich kann für diese Nutzungspotenziale zu einem Ortungsbeziehungsweise Orientierungssystem werden. Mit einer damit realisierbaren Selbstortung des Kommunikationsendgerätes können nun Dienste bereitgestellt werden, beispielsweise eine Navigation, eine Bereitstellung von ortsspezifischen Informationen und/oder dergleichen.

Ein Aspekt der Beacon-Technologie ist die Möglichkeit zur Konfiguration typischer Parameter, wie beispielsweise eine Signalstärke, ein Sendeintervall und/oder dergleichen des Beacon. Mit unterschiedlichen Konfigurationen können verschiedene Anwendungsszenarien individuell unterstützt werden. Wenn zum Beispiel eine hohe Servicequalität in Bezug auf eine genaue Lokalisierung in kurzen Abständen gewünscht ist, beispielsweise bei einer Indoor-Navigation, können zum Beispiel sehr kurze Sendeintervalle zu konfigurieren sein.

Insbesondere bei digital gesteuerten Systemen, zum Beispiel unter Nutzung von Digital Addressable Lighting Interfaces (DALI), sollte eindeutig identifiziert werden können, welches Leuchtmittel beziehungsweise welche Leuchteinrichtung an welchem Ort angeordnet ist, um mittels digitaler Lichtsteuerung eine exakte Ansteuerung der Leuchteinrichtungen beziehungsweise deren Leuchtmittel in einem bestimmten Bereich zu ermöglichen. Die Leuchteinrichtungen benötigen hierzu eine eindeutige Adresse, welche ihre Position in einem vorgegebenen Bereich wiederspiegelt. Der Fachmann nennt eine derartige Zuordnung von Leuchteinrichtungen zu entsprechenden Positionen beziehungsweise Adressen "kommissionieren". Hierbei müssen mehrere Informationen zusammengeführt werden, nämlich die eindeutigen Identifikationsdaten einer jeweiligen Leuchteinrichtung, ein Installationsort der jeweiligen Leuchteinrichtung in einem vorgegebenen Bereich, das heißt, eine physikalische Adresse der Leuchteinrichtung, sowie eine Kennung der Leuchteinrichtung, das heißt, zum Beispiel ihre digitale Adresse.

Die digitale Adresse einer Leuchteinrichtung kann in der Regel über Powerline-Kommunikation oder eine ähnliche leistungsbasierte Kommunikationsverbindung über die Energieverteilung an eine Steuerung beziehungsweise Datenverarbeitung übermittelt werden. Die Leuchteinrichtung beziehungsweise ein Vorschaltgerät der Leuchteinrichtung kann sich somit mit ihrer digitalen Adresse bei der Steuerung anmelden. Damit ist jedoch noch nicht die Information verfügbar, an welcher physikalischen Stelle im vorgegebenen Bereich die Leuchteinrichtung tatsächlich angeordnet ist. Diese Information ist aber erforderlich, wenn nur ein definierter Bereich beleuchtet werden soll, beispielsweise nur ein Besprechungsraum oder ein Teil davon oder dergleichen.

Derzeit können Leuchteinrichtungen beziehungsweise Leuchtmittel und gleichzeitig deren Standort in der Regel nicht ohne weiteres elektronisch identifiziert werden. Typischerweise kann nur über einen Aufkleber oder eine Aufprägung erkannt werden, beispielsweise auf einem Gehäuse der Leuchteinrichtung, um was für einen Typ der Leuchteinrichtung beziehungsweise des Leuchtmittels es sich handelt. Eine andere aufwendige Möglichkeit ist es, jede digital angemeldete Leuchteinrichtung im Rahmen des Systems einzeln blinken zu lassen und manuell eine Positionsinformation in einem Layout zu markieren.

Um Leuchteinrichtungen und/oder Leuchtmittel im Rahmen des Systems effizient mit einem Lichtmanagementsystem (LMS) zu verbinden, wäre es vorteilhaft, eine oder mehrere elektronische beziehungsweise digitale Identifikationsdaten zur Erkennung des Gesamtsystems oder einzelner Komponenten des Gesamtsystems zur Verfügung zu haben.

Eine spezifische Problematik besteht ferner darin, dass in der Regel in einem Installationsplan Positionen der Leuchteinrichtungen beziehungsweise Leuchtmittel für einen Beleuchtungsbereich als zum Beispiel vorgegebenen Bereich beziehungsweise Service-Bereich festgelegt werden. Dies gibt einem Installateur vor, welche der angelieferten beziehungsweise kommissionierten Leuchteinrichtungen, zum Beispiel bezüglich eines Leuchtentyps oder dergleichen, an welcher Position des Bereichs, beispielsweise des Gebäudes, entsprechend dem Installationsplan angeordnet werden sollen.

Ortsbezogene Dienste beziehungsweise Services, wie zum Beispiel Navigation eines Nutzers oder dergleichen, mittels Beacon sollen dem Nutzer in einem vorgegebenen Bereich, vorzugsweise permanent und ohne Einschränkung, zur Verfügung stehen. Dies erfordert neben einer unterbrechungsfreien elektrischen Energieversorgung auch eine regelmäßige Wartung beziehungsweise gegebenenfalls auch Aktualisierung von Rechnerprogrammen wie zum Beispiel der Firmware oder dergleichen. Insbesondere Firmware-Updates von technischen Systemen sind von hoher Bedeutung. Sie dienen in der Regel einer Fehlerbeseitigung, einer Leistungsoptimierung sowie gegebenenfalls auch einer Funktionserweiterung des technischen Systems. So können zum Beispiel Fehler, sogenannte Bugs, behoben werden, wodurch die Zuverlässigkeit gesteigert werden kann. Darüber hinaus können Sicherheitslücken geschlossen oder technische Funktionen des Systems nachträglich frei- oder abgeschaltet werden. Somit erklärt sich ein hoher Bedarf, Firmware-Updates in regelmäßigen, insbesondere situationsspezifischen, Abständen durchzuführen.

Die folgenden Sachverhalte können bei der Anwendung von Beacons zu beachten sein:
- Derzeit werden für die Energieversorgung der Beacons Batterien eingesetzt. Durch die Notwendigkeit, diese Batterien in regelmäßigen Zyklen zu wechseln, ergibt sich ein hoher Aufwand sowie entsprechend hohe Lebenszykluskosten für den jeweiligen Beacon.
- Eine hohe Service-Qualität, beispielsweise eine hohe Ortungsgenauigkeit, eine hohe Reichweite, ein kurzes Sendeintervall und/oder dergleichen, führt in der Regel zu einem entsprechend hohen Bedarf an elektrischer Energie für die Sendeeinrichtung beziehungsweise den Beacon, sodass die Batterie bei einem batteriebetriebenen Beacon bereits nach kurzer Zeit, zum Beispiel nach einem Monat, ausgetauscht werden muss, um den bestimmungsgemäßen Betrieb darüber hinaus aufrechterhalten zu können.
- Jeder Austausch einer Batterie birgt zudem das Risiko, dass die Funktionalität des Ortungssystems durch eine Positionsveränderung oder eine falsche Handhabung des Beacon nachteilig beeinflusst werden kann.
- Darüber hinaus besteht das Problem, dass ein Betreiber einen Energiemangel des Beacon nicht bemerkt beziehungsweise den Beacon nicht wieder auffindet, wenn der Beacon keine ausreichende Restenergiemenge hat, um sein Funksignal aussenden zu können.
- Die Dienste des Beacon zum Beispiel in Bezug auf Navigation oder dergleichen, sollen den Nutzern jedoch vorzugsweise permanent zur Verfügung gestellt werden können. Hierfür ist eine unterbrechungsfreie Energieversorgung wünschenswert.
- Eine Anbringung beziehungsweise eine Installation der Beacons an beziehungsweise in oder als Teil der Leuchteinrichtung würde es gegenüber einem batteriebetriebenen Beacon ermöglichen, die Energieversorgung der Leuchteinrichtung, zum Beispiel ein Vorschaltgerät des Leuchtmittels oder dergleichen, für seine eigene Energieversorgung des Beacon zu nutzen und somit die Batterie des Beacon zumindest teilweise zu substituieren und den damit verbundenen Problemstellungen entgegenzuwirken.

In einem vorgegebenen Bereich, in dem häufig auch wenigstens ein Beacon angeordnet ist, sind häufig auch steuerbare technische Infrastrukturelemente beziehungsweise Vorrichtungen angeordnet, zum Beispiel die Leuchteinrichtung, eine Klimaanlage, Jalousien und/oder dergleichen. Diese steuerbaren Vorrichtungen lassen sich zunehmend neben herkömmlichen Bedienelementen, beispielsweise manuell betätigbaren Tastern oder Schaltern, mittels Kommunikationsendgeräten wie Smartphones, Tablets und/oder dergleichen steuern. Dabei erfolgt die Ansteuerung abhängig von der jeweiligen steuerbaren Vorrichtung über unterschiedlichste Kommunikationsschnittstellen, wie zum Beispiel WLAN, Bluetooth, ZigBee, DALI-Bus und/oder dergleichen.

So offenbart die US 2014/0106735 A1 eine Nutzeridentifikation und eine Positionsbestimmung bei Steueranwendungen.

Mit zunehmender Anzahl der zu steuernden Vorrichtungen, insbesondere in einem Gebäude oder einem entsprechenden Service-Areal kann hierbei ein unübersichtliches Gesamtsystem die Folge sein. Im Sinne einer hohen Benutzungsfreundlichkeit ist es gewünscht, dem Nutzer von seinem aktuellen Standort aus die im nahen Umfeld befindlichen steuerbaren Vorrichtungen zur Steuerung vorzuschlagen. Hierzu benötigt das Kommunikationsendgerät zusätzliche ortsbezogene Daten. Weiterhin erweist es sich als gewünscht beziehungsweise sogar erforderlich, sicherheitskritische Infrastruktur-Vorrichtungen vor unbefugtem Zugriff zu schützen.

Der Erfindung liegt somit die Aufgabe zugrunde, ein Verfahren zum Steuern von einer steuerbaren Vorrichtung sowie ein System hierfür zu verbessern.

Als Lösung werden mit der Erfindung ein Verfahren sowie ein System gemäß den unabhängigen Ansprüchen vorgeschlagen.

Weitere vorteilhafte Ausgestaltungen ergeben sich anhand von Merkmalen der abhängigen Ansprüche.

Bezüglich eines gattungsgemäßen Verfahrens wird insbesondere vorgeschlagen, dass das Verfahren die Schritte umfasst:
- Zuordnen der wenigstens einen steuerbaren Vorrichtung zu der Sendeeinrichtung,
- Empfangen des Funksignals mittels des Kommunikationsendgerätes,
- Auswerten des Funksignals zum Erfassen der spezifischen Identifikationsdaten,
- Ermitteln der wenigstens einen der Sendeeinrichtung zugeordneten steuerbaren Vorrichtung anhand der erfassten spezifischen Identifikationsdaten,
- Herstellen einer Kommunikationsverbindung zwischen der wenigstens einen Vorrichtung und dem Kommunikationsendgerät und
   - Übermitteln von einem Steuerbefehl entsprechenden Daten zum Steuern der wenigstens einen Vorrichtung und/oder der Sendeeinrichtung selbst.

In Bezug auf ein gattungsgemäßes System wird insbesondere vorgeschlagen, dass das System aufweist:
- die steuerbare Vorrichtung,
- eine Sendeeinrichtung, die ein Funksignal mit für die Sendeeinrichtung spezifischen Identifikationsdaten drahtlos aussendet, wobei die wenigstens eine steuerbare Vorrichtung der Sendeeinrichtung zugeordnet ist,
- ein Kommunikationsendgerät zum Steuern der steuerbaren Vorrichtung und/oder der Sendeeinrichtung selbst, wobei das Kommunikationsendgerät ausgebildet ist, das Funksignal zu empfangen und zum Erfassen der spezifischen Identifikationsdaten auszuwerten,
- eine Ermittlungseinheit zum Ermitteln der wenigstens einen der Sendeeinrichtung zugeordneten steuerbaren Vorrichtung anhand der erfassten spezifischen Identifikationsdaten,
- wobei eine Kommunikationsverbindung zwischen der wenigstens einen Vorrichtung und dem Kommunikationsendgerät herstellbar ist, um einem Steuerbefehl entsprechende Daten zum Steuern der wenigstens einen steuerbaren Vorrichtung und/oder der Sendeeinrichtung selbst zu übermitteln.

Die Erfindung basiert auf der Erkenntnis, dass durch die Einbeziehung eines lokalen Beacon gattungsgemäße Verfahren und Systeme erheblich verbessert werden können. Dadurch, dass mit dem Beacon eine lokale Positionierung des Kommunikationsendgerätes erreicht werden kann, kann nicht nur die Nutzerfreundlichkeit verbessert werden, sondern es kann zugleich auch die Sicherheit erhöht werden. Durch die Erfindung ist es nämlich möglich, die Bedienbarkeit von steuerbaren Vorrichtungen auf den vorgegebenen Bereich zu begrenzen. Dadurch kann vermieden werden, dass von außerhalb des vorgegebenen Bereichs die steuerbaren Vorrichtungen in unerwünschter Weise gesteuert werden können. Um hierbei die erforderliche Zuverlässigkeit im bestimmungsgemäßen Betrieb erreichen zu können, ist aus diesem Grund die Sendeeinrichtung beziehungsweise der Beacon in beziehungsweise an der Leuchteinrichtung angeordnet, die sich ebenfalls im vorgegebenen Bereich befindet.

Die Sendeeinrichtung beziehungsweise der Beacon kann dadurch Teil einer Lichtinstallation werden, die in dem Service-Areal angeordnet ist. Vorzugsweise umfasst der vorgegebene Bereich zumindest einen Teil des Service-Areals. Das Service-Areal kann zum Beispiel ein Bürogebäude aber auch ein Freigelände und/oder dergleichen sein.

Der vorgegebene Bereich ist vorzugsweise durch eine Kommunikationsreichweite des jeweiligen Kommunikationsendgerätes mit der Sendeeinrichtung beziehungsweise dem Beacon bestimmt. Der vorgegebene Bereich kann beispielsweise auch durch die Leuchteinrichtung bestimmt beziehungsweise vorgegeben sein.

Auch wenn sich das Steuern auf die steuerbare Vorrichtung bezieht, soll im Rahmen dieser Offenbarung auch ein Steuern der Sendeeinrichtung selbst mit umfasst sein. Das Steuern kann sich daher sowohl auf die Vorrichtung als auch auf die Sendeeinrichtung oder auch auf beide beziehen, insbesondere natürlich wenn die Sendeeinrichtung und die Vorrichtung zum Beispiel zumindest teilweise einstückig miteinander ausgebildet sind.

So kann vorgesehen sein, dass das Steuern auch ein Steuern der Sendeeinrichtung umfasst. Das Steuern der Sendeeinrichtung kann zum Beispiel genutzt werden, um die spezifischen Identifikationsdaten gegebenenfalls anpassen zu können, beispielsweise im Zusammenhang mit einer Kommissionierung oder dergleichen, insbesondere aber auch unter besonderer Berücksichtigung der steuerbaren Vorrichtung. So können unter anderem sendeeinrichtungsspezifische Steuer- und/oder Konfigurationsdaten, wie zum Beispiel Universally Unique Identifier (UUID), major ID, minor ID, Uniform Resource Locator (URL), Sensorinformationen und/oder dergleichen, allgemeine weitere Content-Daten, Sendeintervalle, Sendeleistung, Daten über die Sende- und/oder Empfangsleistung und/oder dergleichen. Dabei kann vorgesehen sein, dass ein Zugriff auf die spezifischen Identifikationsdaten geschützt sein kann, zum Beispiel indem ein Zugriff eine Authentifizierung erfordert.

Darüber hinaus kann das Steuern der Sendeeinrichtung auch dazu dienen, die steuerbare Vorrichtung unmittelbar zu steuern. Zu diesem Zweck kann die steuerbare Vorrichtung steuerungstechnisch mit der Sendeeinrichtung beziehungsweise dem Beacon gekoppelt sein. Vorteilhaft kann diese Weiterbildung auch dann zum Einsatz kommen, wenn der Sendeeinrichtung beziehungsweise dem Beacon mehr als eine steuerbare Vorrichtung zugeordnet ist. Dem Grunde nach braucht der Sendeeinrichtung beziehungsweise dem Beacon nämlich nicht nur eine einzige steuerbare Vorrichtung zugeordnet zu sein, sondern es können auch mehrere steuerbare Vorrichtungen der Sendeeinrichtung beziehungsweise dem Beacon zugeordnet sein, insbesondere wenn sie im gleichen vorgegebenen Bereich angeordnet sind.

Das Herstellen der Kommunikationsverbindung zwischen dem Kommunikationsendgerät und der steuerbaren Vorrichtung kann somit auch umfassen, dass die Daten an die Sendeeinrichtung beziehungsweise den Beacon übermittelt werden und diese eine entsprechende Steuerung der wenigstens einen steuerbaren Vorrichtung vornimmt. Darüber hinaus kann vorgesehen sein, dass die Sendeeinrichtung beziehungsweise der Beacon aus den empfangenen Daten den entsprechenden Steuerbefehl ermittelt und diesen zum Steuern der steuerbaren Vorrichtung anwendet oder an diese weiterleitet.

Die Sendeeinrichtung beziehungsweise der Beacon können nicht nur als reine Sendeeinrichtung zum Aussenden des Funksignals nach Art von Rundfunk dienen, sie können darüber hinaus auch eine Empfangseinheit aufweisen, die es ermöglicht, vorzugsweise per Funk, insbesondere per Nahfunk, ein Kommunikationssignal zu empfangen, beispielsweise vom Kommunikationsendgerät, welches sich in Kommunikationsreichweite zur Sendeeinrichtung beziehungsweise zum Beacon befindet, wodurch dann eine Sende-Empfangs-Einrichtung gebildet wird. Dadurch ist es möglich, zusätzliche Funktionalität bereitzustellen, beispielsweise indem sendeeinrichtungsseitig beziehungsweise beaconseitig das Kommunikationssignal ausgewertet wird und aufgrund der hierdurch gewonnenen Daten ergänzend zum Funksignal weitere Daten ausgesendet werden können, beispielsweise in Bezug auf eine Funktion der Beleuchtungseinrichtung, bestückte Leuchtmittel der Leuchteinrichtung, verfügbare Datenformate und/oder dergleichen.

Nahfunk meint vorliegend insbesondere, dass mittels einer Funkverbindung eine Kommunikationsreichweite in einem Bereich von wenigen Metern, beispielsweise in einem Bereich von etwa 0,5 m bis etwa 25 m, vorzugsweise in einem Bereich von etwa 1 m bis etwa 10 m, besonders bevorzugt in einem Bereich von etwa 1,5 m bis etwa 5 m erreicht werden kann.

Dabei erlaubt es die Erfindung, aufgrund der Anordnung der Sendeeinrichtung beziehungsweise des Beacon eine bestehende Energie- und/oder Kommunikationsschnittstelle einer Lichtinstallation beziehungsweise der Leuchteinrichtung oder auch eines Leuchtmittels der Leuchteinrichtung für die Energieversorgung einer oder mehrerer der Sendeeinrichtungen beziehungsweise Beacons zu nutzen. Dies kann sekundärseitig und/oder primärseitig auch beispielsweise Kommunikationsschnittstellen eines elektronischen Vorschaltgeräts (ECG) der Leuchteinrichtung sowie Kommunikations- und/oder kombinierte Energie- und Kommunikationsschnittstellen umfassen.

Eine Möglichkeit, bei der ein separater Energiewandler für die Sendeeinrichtung beziehungsweise den Beacon eingespart werden kann, ist ferner ein elektrischer Anschluss der Sendeeinrichtung beziehungsweise des Beacon parallel zu einem Leuchtmittel, insbesondere zu einer Leuchtdiodeneinheit beziehungsweise einer Gruppe von Leuchtdioden oder unter Umständen einem Leuchtdioden-Trägermodul und/oder dergleichen.

Die Erfindung sieht vor, dass die wenigstens eine steuerbare Vorrichtung zu der Sendeeinrichtung beziehungsweise dem Beacon zugeordnet wird. Dadurch ist eine Verbindung zwischen der steuerbaren Vorrichtung und der Sendeeinrichtung beziehungsweise dem Beacon hergestellt, sodass eine Selektivität bezüglich der Steuerung der steuerbaren Vorrichtung erreicht werden kann. Es ist somit nicht mehr möglich, die steuerbare Vorrichtung nahezu beliebig mit Kommunikationsendgeräten steuern zu können. Vielmehr ist hierdurch die Grundlage geschaffen, dass die steuerbare Vorrichtung nur unter vorgegebenen Bedingungen gesteuert werden kann.

Hierfür schlägt die Erfindung vor, dass das Kommunikationsendgerät das Funksignal der Sendeeinrichtung beziehungsweise des Beacon empfängt und daraus die spezifischen Identifikationsdaten der Sendeeinrichtung beziehungsweise des Beacon ermittelt. Anhand der ermittelten spezifischen Identifikationsdaten ist es nunmehr möglich, die der Sendeeinrichtung zugeordneten steuerbaren Vorrichtungen zu ermitteln. Dadurch stehen kommunikationsendgeräteseitig nicht mehr beliebige steuerbare Vorrichtungen zur Verfügung, sondern lediglich nur die, die sich aufgrund der Kommunikationsreichweite mit dem Beacon als im vorgegebenen Bereich befindlich ergeben. Dadurch ist eine Selektivität geschaffen, die es erlaubt, steuerbare Vorrichtungen nur durch berechtigte beziehungsweise authentifizierte Kommunikationsendgeräte steuern zu können.

Vorzugsweise ist vorgesehen, dass nur dann, wenn die steuerbare Vorrichtung als der Sendeeinrichtung zugeordnet ermittelt worden ist, eine Kommunikationsverbindung zwischen der wenigstens einen Vorrichtung und dem Kommunikationsendgerät hergestellt wird und einem Steuerbefehl entsprechende Daten zum Steuern der wenigstens einen Vorrichtung übermittelt werden.

Sicherheitskritische Infrastruktur-Vorrichtungen als steuerbare Vorrichtungen können dadurch zumindest teilweise vor einem unbefugten Zugriff geschützt werden. Der Zugriff kann mittels der Erfindung auf sich lediglich in unmittelbarer Umgebung angeordnete steuerbare Vorrichtungen beschränkt werden.

Dem Grunde nach kann mit der Erfindung natürlich auch erreicht werden, dass gerade dann, wenn die Kommunikationsreichweite zu einem Beacon hergestellt ist, eine entsprechende zugeordnete steuerbare Vorrichtung gerade nicht gesteuert werden kann. Eine Steuerbarkeit kann erst dann vorgesehen sein, wenn die Kommunikationsverbindung zu der Sendeeinrichtung beziehungsweise dem Beacon nicht mehr besteht beziehungsweise das Funksignal von dem Kommunikationsendgerät nicht mehr empfangen werden kann. Dies ist beispielsweise vorteilhaft für sicherheitsrelevante Bereiche, in denen Arbeiten von Personal vorgenommen werden, und steuerbare Vorrichtungen gefährliche Zustände für das Personal zur Folge haben können. Dadurch kann vermieden werden, dass versehentlich von einem sich in Kommunikationsreichweite zu dem Beacon befindlichem Nutzer eine steuerbare Vorrichtung bedient wird, die einen gefährlichen Zustand für den Nutzer zur Folge haben könnte.

Besonders vorteilhaft lässt sich die Erfindung bei Bürogebäuden einsetzen, welches zum Beispiel über mehrere Räume, insbesondere Besprechungsräume und Büros verfügen kann, die mit elektrisch steuerbaren Klimaanlagen, Leuchteinrichtungen, Jalousien und/oder dergleichen als steuerbare Vorrichtungen ausgestattet sein können. Die Steuerung der jeweiligen steuerbaren Vorrichtungen kann dabei über eine Anwendung beziehungsweise Applikation auf dem Kommunikationsendgerät durch einen Nutzer des Kommunikationsendgerätes vorgenommen werden. Beispielsweise kann vorgesehen sein, dass abhängig davon, in welchem Raum des Bürogebäudes sich der Nutzer befindet, die steuerbaren Vorrichtungen manuell aus einer Liste ausgewählt werden können. Hierdurch kann sich ein erhöhter Aufwand ergeben, weil die steuerbaren Vorrichtungen zunächst identifiziert werden müssen. Weiterhin kann durch Fehlbenutzung eine steuerbare Vorrichtung in einem anderen Raum gesteuert werden, woraus sich eine Störung von beispielsweise anderen Personen in diesem Raum ergeben kann oder auch ein erhöhter Energieverbrauch die Folge sein kann, beispielsweise wenn eine Heizvorrichtung als steuerbare Vorrichtung oder auch eine steuerbare Klimaanlage gesteuert wird.

Die Deaktivierung der Steuerungsmöglichkeit kann zum Beispiel für die Nutzung von öffentlichen Verkehrsmitteln mit der Erfindung als vorteilhaft erweisen, indem zum Beispiel ein Nutzer eine elektronische Fahrkarte mittels seines Kommunikationsendgerätes kauft. Da die Fahrkarte in der Regel vor Fahrtantritt gelöst werden muss, kann mit der Erfindung erreicht werden, dass die Kauffunktion während der Nutzung des öffentlichen Verkehrsmittels nicht mehr möglich ist, das heißt, blockiert ist. Dies kann dadurch erreicht werden, dass in den Verkehrsmitteln entsprechende Sendeeinrichtungen beziehungsweise Beacons angeordnet sind, und sobald sich das Kommunikationsendgerät des Nutzers in Kommunikationsreichweite zu dem Beacon befindet, die Kauffunktion des Kommunikationsendgerätes, die beispielsweise mittels einer Anwendung beziehungsweise Application realisiert sein kann, deaktiviert ist.

Im Rahmen der Erfindung wird eine Freigabe beziehungsweise eine Deaktivierung der Steuerungsmöglichkeit einer steuerbaren Vorrichtung auf Basis von empfangenen Funksignalen der Sendeeinrichtung beziehungsweise des Beacon vorgesehen, wobei die Steuerung der steuerbaren Vorrichtung mittels des Kommunikationsendgerätes erfolgt und vorzugsweise zusätzlich eine Datenbank mit entsprechenden Systeminformationen, insbesondere in Bezug auf das Gesamtsystem und eine Zuordnung der steuerbaren Vorrichtungen zu Sendeeinrichtungen beziehungsweise Beacons umfasst. Die Datenbank kann dabei zum Beispiel des Kommunikationsendgerätes sein, als separater Dienste-Server vorgesehen sein, als Teil der Sendeeinrichtung oder auch als Cloud-Anwendung ausgebildet sein. Im letztgenannten Fall kann ein Zugriff durch das Kommunikationsendgerät über einen drahtlosen Kommunikationskanal vorgesehen sein.

Mittels des durch die Erfindung vorgeschlagenen Systems kann etwa in Abhängigkeit von einem spezifischen Standort innerhalb des Gebäudes beziehungsweise Bürogebäudes beziehungsweise des vorgegebenen Bereichs eine Freigabe von steuerbaren Vorrichtungen wie Infrastruktur-Elementen und dergleichen erreicht werden, die anschließend durch den Nutzer mittels des Kommunikationsendgerätes gesteuert werden können. Ebenso kann in Abhängigkeit vom Standort eine Deaktivierung eines Dienstes erfolgen, die an der jeweiligen Position beziehungsweise in dem jeweiligen vorgegebenen Bereich nicht möglich sein soll.

Eine Basis der Erfindung bildet dabei die Sendeeinrichtung beziehungsweise der Beacon, die beziehungsweise der in oder unmittelbar an der Leuchteinrichtung angeordnet ist und vorzugsweise durch die Leuchteinrichtung mit elektrischer Energie versorgt wird. Dadurch kann die für die erfindungsgemäß vorgesehenen Steuerungsmöglichkeiten erforderliche Zuverlässigkeit im bestimmungsgemäßen Betrieb erreicht werden. Auch wenn die Sendeeinrichtung beziehungsweise der Beacon getrennt oder entfernt von der Leuchteinrichtung angeordnet sein kann, kann sie beziehungsweise er vorzugsweise in oder unmittelbar an der Leuchteinrichtung angeordnet sein. Dadurch kann die Position der Sendeeinrichtung der Position der Leuchteinrichtung unmittelbar zugeordnet werden.

Es kann vorgesehen sein, dass ein elektrischer Anschluss der Sendeeinrichtung beziehungsweise des Beacon parallel zu Leuchtdiodenmodulen beziehungsweise zu einer Gruppe von Leuchtdioden oder unter Umständen zu einem Leuchtdioden-Trägermodul vorgesehen ist, sodass nach Möglichkeit kein aufwendiger Energiewandler benötigt wird. Dadurch kann die für den bestimmungsgemäßen Betrieb erforderliche zuverlässige Energieversorgung realisiert werden.

Darüber hinaus besteht die Möglichkeit, bestehende Energie- und Kommunikationsschnittstellen einer digital gesteuerten Lichtinstallation für die Energieversorgung der Sendeeinrichtung beziehungsweise des Beacon zu nutzen. Dies kann schnittstellenprimärseitig vom elektronischen Vorschaltgerät sowie Kommunikations- und/oder kombinierte Energie- und Kommunikationsschnittstellen umfassen. Da bei digital gesteuerten Lichtinstallationen die Primärschnittstelle in der Regel mit elektrischer Spannung beaufschlagt ist, kann selbst dann, wenn zum Beispiel die Leuchteinrichtung deaktiviert beziehungsweise ausgeschaltet ist, eine Energieversorgung für die Sendeeinrichtung beziehungsweise den Beacon gewährleistet werden.

Das Funksignal der Sendeeinrichtung beziehungsweise des Beacon enthält die spezifischen Identifikationsdaten, die mittels des Funksignals vorzugsweise zyklisch ausgesendet werden. Die spezifischen Identifikationsdaten umfassen eine eindeutige Kennung, nämlich die UUID, die mittels eines Datenübertragungsprotokolls wie zum Beispiel iBeacon^{®} der Firma Apple Inc., Eddistone^{®} der Firma Google oder dergleichen ausgesendet werden kann. Die spezifischen Identifikationsdaten werden vom Kommunikationsendgerät empfangen und ausgewertet, beispielsweise indem die spezifischen Identifikationsdaten in einer Datenbank abgeglichen werden, zum Beispiel um verfügbare steuerbare Vorrichtungen im vorgegebenen Bereich, beispielsweise einem Raum oder dergleichen oder mittels eines Layoutplans hinterlegte Positionen der Sendeeinrichtung beziehungsweise des Beacon und der zugeordneten steuerbaren Vorrichtungen zu ermitteln. Darauf basierend können weitere Nutzungen realisiert werden.

Die Kommunikationsverbindung zwischen dem Kommunikationsendgerät und der steuerbaren Vorrichtung kann zum Beispiel leitungsgebunden und/oder drahtlos erfolgen. Die Kommunikationsverbindung kann dabei ein vorgegebenes Kommunikationsprotokoll nutzen. Die Kommunikationsverbindung ist vorzugsweise bidirektional, sodass Daten für den Steuerungsbefehl nicht nur an die steuerbare Vorrichtung übermittelt werden können, sondern es können auch Daten von der steuerbaren Vorrichtung empfangen werden, beispielsweise bezüglich eines vorgegebenen Betriebszustands und/oder dergleichen. Dem Grunde nach reicht zum Steuern der steuerbaren Vorrichtung jedoch eine unidirektionale Kommunikationsverbindung aus, die es erlaubt, die dem Steuerbefehl entsprechenden Daten an die steuerbare Vorrichtung zu übermitteln.

Das Zuordnen der wenigstens einen steuerbaren Vorrichtung zu der Sendeeinrichtung kann beispielsweise dadurch erfolgen, dass in einer Datenbank eine Datei vorhanden ist, in der die Sendeeinrichtung einer jeweiligen steuerbaren Vorrichtung beziehungsweise umgekehrt zugeordnet ist, beispielsweise nach Art einer Tabelle oder dergleichen. Die Zuordnung kann allerdings auch dadurch erfolgen, dass die steuerbare Vorrichtung das Funksignal der Sendeeinrichtung empfängt und ein entsprechendes Zuordnungssignal an die Sendeeinrichtung oder auch an eine Zentrale oder dergleichen übermittelt, wo dann die entsprechende Zuordnung abrufbar bereitgehalten wird.

Das Auswerten des Funksignals dient dem Erfassen der spezifischen Identifikationsdaten. Das Auswerten des Funksignals kann durch das Kommunikationsendgerät selbst oder auch durch eine Einrichtung vorgenommen werden, die entfernt von dem Kommunikationsendgerät angeordnet ist und mit der das Kommunikationsendgerät in Kommunikationsverbindung steht, zum Beispiel über ein Mobilfunknetz, einen Internetzugang, beispielsweise mittels WLAN oder dergleichen. Erfolgt das Auswerten des Funksignals extern in Bezug auf das Kommunikationsendgerät, können von der Einrichtung, die die Auswertung vornimmt, die spezifischen Identifikationsdaten an das Kommunikationsendgerät übermittelt werden.

Das Ermitteln der wenigstens einen der Sendeeinrichtung zugeordneten steuerbaren Vorrichtung erfolgt anhand der erfassten spezifischen Identifikationsdaten. Auch dieser Schritt kann durch das Kommunikationsendgerät selbst vorgenommen werden. Alternativ kann aber auch vorgesehen sein, dass die Einrichtung, die bereits die Auswertung des Funksignals vorgenommen hat, das Ermitteln durchführt und als Ergebnis des Ermittelns zum Beispiel eine Liste mit der jeweiligen Sendeordnung zugeordneten steuerbaren Vorrichtungen an das Kommunikationsendgerät übermittelt. Vorzugsweise sind nur diese ermittelten steuerbaren Vorrichtungen mittels des Kommunikationsendgeräts vorliegend steuerbar. Dadurch wird dem Nutzer nicht nur eine übersichtliche Darstellung in Bezug auf die Auswahl der Vorrichtungen, die er gerne steuern möchte, ermöglicht, sondern es ermöglicht darüber hinaus, dass steuerbare Vorrichtungen, die der Sendeeinrichtung nicht zugeordnet sind, durch das Kommunikationsendgerät nicht gesteuert werden können. Dem Grunde nach kann auch eine Invertierung diesbezüglich vorgesehen sein, dass gerade die Vorrichtungen nicht gesteuert werden sollen, der Sendeeinrichtung zugeordnet sind. Diese Ausgestaltung eignet sich beispielsweise für die oben bereits beschriebene Fahrkartenbezugsproblematik.

Das Herstellen der Kommunikationsverbindung umfasst, dass die Kommunikationsverbindung wenigstens über eine Steuerungszentrale hergestellt wird. Hierbei braucht also keine unmittelbare Kommunikationsverbindung zwischen dem Kommunikationsendgerät und der steuerbaren Vorrichtung hergestellt zu werden. Die steuerbare Vorrichtung kann stattdessen über eine Kommunikationsverbindung mit der Steuerungszentrale verbunden sein und von dieser entsprechend gesteuert werden. Die Steuerungszentrale steht dann mittelbar über die Kommunikationsverbindung mit dem Kommunikationsendgerät in Kommunikationsverbindung, sodass das Kommunikationsendgerät an die Steuerungszentrale die Daten für den Steuerbefehl übermittelt. Die Steuerungszentrale kann diese Daten dann an die steuerbare Vorrichtung in vorgegebener Weise weiterleiten oder gegebenenfalls auch zuvor in ein geeignetes Datenformat umwandeln, bevor eine Weiterleitung an die steuerbare Vorrichtung erfolgt. Diese Ausgestaltung hat den Vorteil, dass zur Herstellung der Kommunikationsverbindung auch andere drahtlose Kommunikationsverbindungen genutzt werden können, wie beispielsweise eine Kommunikationsverbindung über zumindest teilweise ein Mobilfunknetz oder dergleichen. Die Kommunikationsverbindung kann auch hier je nach Bedarf unidirektional oder bidirektional ausgebildet sein.

Das Herstellen der Kommunikationsverbindung zwischen der wenigstens einen Vorrichtung und dem Kommunikationsendgerät kann zum Beispiel automatisiert erfolgen, beispielsweise dadurch, dass die steuerbaren Vorrichtungen zuvor ermittelt worden sind. Es kann aber auch vorgesehen sein, dass der Nutzer selbst noch eine Eingabe am Kommunikationsendgerät vornimmt, woraufhin dann erst die Kommunikationsverbindung hergestellt wird. Dies ist zum Beispiel vorteilhaft, wenn mehr als eine einzige steuerbare Vorrichtung ermittelt worden ist, die der Sendeeinrichtung zugeordnet ist, insbesondere wenn es im Rahmen der gewöhnlichen Nutzung liegt, lediglich eine einzige dieser Vorrichtungen zu steuern.

Besonders vorteilhaft erweist es sich, wenn das Ermitteln ein Bereitstellen von Freigabedaten umfasst, die es der steuerbaren Vorrichtung erlauben, den Steuerbefehl des Kommunikationsendgerätes auszuführen, und/oder dem Kommunikationsendgerät erlauben, den Steuerbefehl an die steuerbare Vorrichtung abzugeben. Dadurch kann eine weitere Selektivität erreicht werden, sodass nicht jedes beliebige Kommunikationsendgerät die steuerbare Vorrichtung zu steuern vermag, welches sich in Kommunikationsreichweite zur Sendeeinrichtung beziehungsweise zum Beacon befindet. Die Freigabedaten können vorzugsweise digitale Daten sein, die beim Ermitteln der wenigstens einen der Sendeeinrichtung zugeordneten steuerbaren Vorrichtung anhand der erfassten spezifischen Identifikationsdaten bereitgestellt werden. Die Freigabedaten können auch durch eine vorgegebene Codierung, insbesondere durch eine Verschlüsselung und/oder dergleichen gegeben sein.

Vorzugsweise umfasst das Ermitteln der Freigabedaten, dass Positionsdaten für eine Position des Kommunikationsendgerätes wenigstens unter Nutzung der spezifischen Identifikationsdaten der Sendeeinrichtung ermittelt werden und anhand der ermittelten Positionsdaten ermittelt wird, ob das Steuergerät im vorgegebenen Bereich positioniert ist. Dadurch kann eine räumliche Verortung erreicht werden, die zum Ergebnis hat, ob das Kommunikationsendgerät im vorgegebenen Bereich angeordnet ist. Ist das Kommunikationsbereich im vorgegebenen Bereich positioniert, kann ein entsprechendes Freigabedatum oder auch entsprechende Freigabedaten bereitgestellt werden. Dem Grunde nach können die Freigabedaten hierbei jedoch auch in den Positionsdaten selbst bestehen oder diese zumindest umfassen. Ist das Kommunikationsendgerät dagegen außerhalb des vorgegebenen Bereichs positioniert, kann dies auch anhand der Freigabedaten ermittelt werden, indem die Freigabedaten entsprechende Daten enthalten, die eine Steuerbarkeit der steuerbaren Vorrichtung verhindern.

Darüber hinaus wird vorgeschlagen, dass das Ermitteln ein Installieren eines spezifischen Rechnerprogramms für eine Rechnereinheit des Kommunikationsendgerätes umfasst. Es ist also für das Ermitteln der wenigstens einen der Sendeeinrichtung zugeordneten steuerbaren Vorrichtung möglich, ein entsprechendes Rechnerprogramm von einer Datenbank zu beziehen, dieses auf dem Kommunikationsendgerät zu installieren und mittels dieses Rechnerprogramms die steuerbare Vorrichtung zu steuern, sofern eine entsprechende Berechtigung, insbesondere Freigabedaten, vorliegen. Das Rechnerprogramm kann darüber hinaus dazu genutzt werden, die Freigabedaten zu ermitteln. Ferner kann das Rechnerprogramm dazu genutzt werden, eine entsprechende Benutzerführung bereitzustellen, sodass der Nutzer die möglichen steuerbaren Vorrichtungen zum Steuern auswählen kann. Schließlich besteht die Möglichkeit, mittels des Rechnerprogramms eine spezifische Kommunikationsverbindung zu der jeweiligen steuerbaren Vorrichtung herzustellen, beispielsweise einen verschlüsselten Kommunikationskanal oder dergleichen, um eine zuverlässige, sichere Steuerung der steuerbaren Vorrichtung erreichen zu können. Das spezifische Rechnerprogramm kann von der Datenbank mittels des Kommunikationsendgerätes auf Basis der spezifischen Identifikationsdaten angefordert werden. Das Kommunikationsendgerät steht vorzugsweise mit der Datenbank in Kommunikationsverbindung, sodass es einen entsprechenden Anforderungsbefehl an die Datenbank übermitteln kann.

Gemäß einer Weiterbildung wird vorgeschlagen, dass das Ermitteln einen Abgleich mit einer Datenbank umfasst, die Daten wenigstens bezüglich der Leuchteinrichtung, der wenigstens einen steuerbaren Vorrichtung und dem vorgegebenen Bereich enthält. Dadurch können entsprechende Zuordnungen abrufbar auf einfache Weise bereitgehalten werden. Die Datenbank kann in einer externen Einrichtung aber auch zumindest teilweise im Kommunikationsendgerät selbst angeordnet sein.

Weiterhin kann vorgesehen sein, dass das Herstellen der Kommunikationsverbindung ein Herstellen einer Kommunikationsverbindung zu der Steuerungszentrale umfasst, wobei die wenigstens eine Vorrichtung über die Steuerungszentrale gesteuert wird. In dieser Ausgestaltung wird der Steuerbefehl also nicht einfach durch die Steuerungszentrale zur steuerbaren Vorrichtung durchgeleitet, sondern die steuerbare Vorrichtung wird mittels der Steuerungszentrale gesteuert, wobei ein Steuerungsbefehl vom Kommunikationsendgerät an die Steuerungszentrale übermittelt wird, die Steuerungszentrale diesen gegebenenfalls noch umsetzt und dann eine Steuerung der steuerbaren Vorrichtung entsprechend vornimmt beziehungsweise veranlasst. Darüber hinaus können ergänzend zusätzliche Funktionen durch die Steuerungszentrale realisiert werden, beispielsweise in Bezug auf eine Sicherheit, Konsistenz des Steuerungsbefehls zum jeweiligen aktuellen Betriebszustand der steuerbaren Vorrichtung und/oder dergleichen.

Weiterhin wird vorgeschlagen, dass zum Zwecke eines Authentifizierens der Position des Kommunikationsendgerätes die Positionsdaten mit dem vorgegebenen Bereich abgeglichen werden und die Daten zum Steuern nur dann an die wenigstens eine Vorrichtung übermittelt werden und/oder die Vorrichtung nur dann den Daten zum Steuern entsprechenden Steuerbefehl ausführt, wenn die Position des Kommunikationsendgerätes authentifiziert ist. Diese Ausgestaltung kann die Zuverlässigkeit in Bezug auf die Selektivität des Steuerns der steuerbaren Vorrichtung weiter verbessern, weil durch das Authentifizieren eine verbesserte Sicherheit erreicht werden kann. Zum Authentifizieren können zum Beispiel neben dem Funksignal der Sendeeinrichtung auch weitere Funksignale anderer Sendeeinrichtungen sowie gegebenenfalls auch weitere Ortungsfunktionen des Kommunikationsendgerätes hinzugezogen werden.

Vorteilhaft wird vorgeschlagen, dass die Freigabedaten eine Berechtigungsinformation umfassen, wobei die Berechtigungsinformation spezifisch für ein einzelnes vorgegebenes Kommunikationsendgerät oder für eine vorgegebene Gruppe von Kommunikationsendgeräten ist. Dadurch kann erreicht werden, dass nur vorgegebene der Kommunikationsendgeräte die steuerbare Vorrichtung zu steuern vermögen. Zu diesem Zweck kann vorgesehen sein, dass das Kommunikationsendgerät selbst eine Identifikation, beispielsweise eine SIMM-Nummer oder dergleichen übermittelt, die zum Beispiel von der Steuerungszentrale oder auch von der steuerbaren Vorrichtung selbst geprüft wird. Bei positiver Prüfung kann eine entsprechende Steuerungsmöglichkeit freigegeben sein. Die Berechtigungsinformation kann ebenfalls in Form von digitalen Daten vorgesehen sein.

Gemäß einer Weiterbildung wird vorgeschlagen, dass die Sendeeinrichtung zumindest teilweise über die Leuchteinrichtung mit elektrischer Energie für ihren bestimmungsgemäßen Betrieb, vorzugsweise unabhängig von einem bestimmungsgemäßen Betrieb der Leuchteinrichtung, versorgt wird. Diese Ausgestaltung hat den Vorteil, dass eine im Wesentlichen kontinuierliche, vorzugsweise unterbrechungsfreie, Energieversorgung für die Sendeeinrichtung bzw. den Beacon bereitgestellt werden kann. Gerade für die erfindungsgemäße Nutzung ist dies von besonderem Vorteil, weil je nach Ausgestaltung des Systems vorgesehen sein kann, dass die steuerbare Vorrichtung ausschließlich mittels des Kommunikationsendgerätes gesteuert werden kann. Da die Steuerbarkeit der steuerbaren Vorrichtung jedoch von der Funktion der Sendeeinrichtung beziehungsweise des Beacon abhängt, würde eine Störung bei der Sendeeinrichtung beziehungsweise dem Beacon auch eine Störung in Bezug auf die Steuerbarkeit der steuerbaren Vorrichtung zur Folge haben. Um hier die Verfügbarkeit des durch die Erfindung bereitgestellten Dienstes zu verbessern, ist die Energieversorgung über die Leuchteinrichtung vorgesehen. Dabei wird vorzugsweise berücksichtigt, dass die Leuchteinrichtung in der Regel über einen Energieversorgungsanschluss verfügt, der vorzugsweise permanent Energie für den bestimmungsgemäßen Betrieb bereitstellt. Dies kann auch ein Kommunikationsanschluss eines Kommunikationsnetzwerkes sein, an dem die Leuchteinrichtung angeschlossen ist.

Ferner wird vorgeschlagen, dass zum Steuern der wenigstens einen Vorrichtung ein dem Kommunikationsendgerät zugeordnetes Einstellungsprofil genutzt wird. Der Nutzer kann auf dem Kommunikationsendgerät ein Profil anlegen, welches vorgegebene Einstellungen enthält, die an die steuerbare Vorrichtung übermittelt werden. Es kann vorgesehen sein, dass das Einstellungsprofil als Ganzes an die steuerbare Vorrichtung übermittelt wird und die steuerbare Vorrichtung die dem Einstellungsprofil entsprechenden Einstellungen automatisiert vornimmt. Darüber hinaus kann aber auch vorgesehen sein, dass das Kommunikationsendgerät anhand des Einstellungsprofils automatisiert einen entsprechenden Steuerungsbefehl an die steuerbare Vorrichtung übermittelt. Die Zuordnung des Einstellungsprofils und des Kommunikationsendgerätes kann beispielsweise mittels Identifikationsdaten des Kommunikationsendgerätes, beispielsweise einer SIMM-Nummer oder dergleichen erfolgen. Das Einstellungsprofil selber kann beispielsweise in Form einer digitale Daten umfassende Datei vorgesehen sein.

Darüber hinaus kann vorgesehen sein, dass das Steuern der wenigstens einen Vorrichtung zumindest teilweise automatisiert auf Basis von wenigstens einem geeigneten Parameter erfolgt, der zum Beispiel mittels geeigneter Sensoren erfasst werden kann. Dadurch braucht kein Eingriff mittels des Kommunikationsendgerätes und/oder eines Nutzers vorgesehen zu werden, um das Steuern auszuführen. Ein Parameter kann zum Beispiel eine Anwesenheit einer Person, ihre Vitalparameter, eine Uhrzeit und/oder dergleichen sein.

Weiterhin kann vorgesehen sein, dass, wenn das Kommunikationsendgerät das Funksignal empfängt, Aktualisierungen für Rechnerprogramme (Software, Firmware) vorgeschlagen werden, beispielsweise für die Sendeeinrichtung beziehungsweise den Beacon, für die steuerbare Vorrichtung und/oder dergleichen. Dazu kann das Kommunikationsendgerät zum Beispiel eine Kommunikationsverbindung von der Sendeeinrichtung beziehungsweis dem Beacon und/oder der steuerbaren Vorrichtung zu einer oder mehreren geeigneten Datenbanken herstellen, sodass eine etwaige Aktualisierung beispielsweise automatisiert durchgeführt werden kann. Die Kommunikationsverbindung kann über ein Mobilfunknetz, ein Gateway oder dergleichen hergestellt werden. Zu diesem Zweck kann auch vorgesehen sein, dass das Kommunikationsendgerät nach Empfang des Funksignals über ein globales Kommunikationsnetzwerk wie dem Internet oder dergleichen geeignete Datenbanken kontaktiert, um entsprechende Daten zu erhalten. Auch dies kann automatisiert erfolgen. Besonders vorteilhaft erweist es sich, wenn das Aktualisieren automatisiert ausgeführt wird, sobald das Kommunikationsendgerät in Kommunikationsreichweite zur Sendeeinrichtung gelangt.

Darüber hinaus wird vorgeschlagen, dass das Steuern der wenigstens einen steuerbaren Vorrichtung automatisiert gemäß dem Einstellungsprofil erfolgt, sobald das Kommunikationsendgerät das Funksignal empfängt. Diese Ausgestaltung hat den Vorteil, dass der Nutzer des Kommunikationsendgerätes selbst keine Handlungen vorzunehmen braucht, damit die steuerbare Vorrichtung die gewünschte Einstellung vornimmt.

Weiterhin wird vorgeschlagen, dass das Steuern der wenigstens einen Vorrichtung automatisiert ein Einnehmen einer Initialeinstellung umfasst, wenn das Kommunikationsendgerät außerhalb einer Empfangsreichweite in Bezug auf das Kommunikationssignal ist. Dies hat zum Vorteil, dass die steuerbare Vorrichtung automatisiert die Initialeinstellung einnimmt, sobald das Kommunikationsendgerät außerhalb der Empfangsreichweite in Bezug auf die Sendeeinrichtung ist und das Funksignal nicht mehr empfängt. Die Initialeinstellung kann beispielsweise eine Einstellung sein, bei der die steuerbare Vorrichtung einen geschützten oder energietechnisch günstigen Betriebszustand einnimmt, beispielsweise bei einer Jalousie ein Einfahren der Jalousie, um diese vor Wettereinwirkungen zu schützen oder dergleichen.

Die bezüglich des erfindungsgemäßen Verfahrens angegebenen Ausführungsvarianten sowie Vorteile und Wirkungen gelten gleichermaßen sinngemäß auch für die erfindungsgemäße Beleuchtungseinrichtung sowie umgekehrt. Dabei können jeweilige Verfahrensmerkmale als funktionelle Merkmale für hierzu geeignete Mittel angesehen werden.

Weitere Vorteile und Merkmale ergeben sich durch die im Folgenden angegebenen Ausführungsbeispiele anhand der beigefügten Figuren. In den Figuren bezeichnen gleiche Bezugszeichen gleiche Merkmale und Funktionen.

Es zeigen:
- Fig. 1: in einer schematischen Blockdarstellung eine Integration eines Beacon als Sendeeinrichtung in eine Leuchteinrichtung eines mehrere Leuchteinrichtungen aufweisenden Beleuchtungssystems,
- Fig. 2: eine schematische Blockdarstellung für eine erste Ausgestaltung eines Systems gemäß der Erfindung,
- Fig. 3: eine schematische Blockdarstellung für eine zweite Ausgestaltung eines Systems gemäß der Erfindung und
- Fig. 4: eine schematische Darstellung einer Etage eines Bürogebäudes mit einem System gemäß der Erfindung.

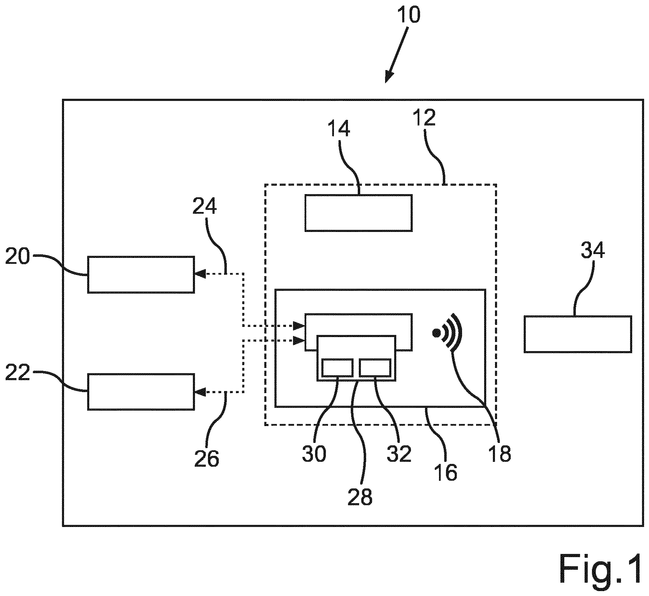

Fig. 1 zeigt in einer schematischen Blockdarstellung als System ein Beleuchtungssystem 10, welches eine Leuchteinrichtung 12 sowie eine Mehrzahl von weiteren Leuchteinrichtungen 20 umfasst. Jede der Leuchteinrichtungen 12, 20 weist ein Leuchtmittel 14 zum Abgeben von Licht sowie einen Beacon 16 als Sendeeinrichtung auf. Der Beacon 16 ist vorliegend in der Leuchteinrichtung 12 angeordnet. Der Beacon 16 sendet ein Funksignal 18 mit für den Beacon 16 spezifischen Identifikationsdaten nach Art von Rundfunk unidirektional drahtlos aus. Das Aussenden erfolgt vorliegend unter Nutzung von Nahfunk basierend auf einem Bluetooth-Low-Energy-Protokoll (BLE).

Der Beacon 16 umfasst eine Steuereinheit 28, die eine Rechnereinheit 30 sowie eine mit der Rechnereinheit 30 kommunikationstechnisch gekoppelte Speichereinheit 32 umfasst. In der Speichereinheit 32 ist ein ablauffähiges Rechnerprogramm für die Rechnereinheit 30 gespeichert, sodass mit der Rechnereinheit 30 eine vorgegebene Funktionalität bereitgestellt werden kann. Vorliegend dient die Funktionalität dazu, den Beacon 16 in vorgebbarer Weise zu betreiben. Die weiteren Leuchteinrichtungen 20 sind dem Grunde nach vergleichbar zu der Leuchteinrichtung 12 aufgebaut.

Vorliegend ist der Beacon 16 als Sende-Empfangs-Einrichtung ausgebildet, der neben dem Aussenden des Funksignals 18 auch eine bidirektionale Kommunikationsverbindung 24 bereitstellen kann. Über die Kommunikationsverbindung 24 ist die Leuchteinrichtung 12, und hier insbesondere der Beacon 16, mit den weiteren Leuchteinrichtungen 20 beziehungsweise deren Beacons verbunden, die entsprechend ausgebildet sind.

Die Kommunikationsverbindung 24 ist vorliegend eine bidirektionale Kommunikationsverbindung, die ebenfalls auf Nahfunk basiert und den vorgenannten BLE-Standard nutzt.

Darüber hinaus steht die Leuchteinrichtung 12, und hier ebenfalls wieder insbesondere der Beacon 16, über eine weitere Kommunikationsverbindung 26 mit einer Infrastruktureinrichtung 22 in Kommunikationsverbindung, über die Daten betreffend einen bestimmungsgemäßen Betrieb der Leuchteinrichtung 12 sowie auch Daten bezüglich der weiteren Leuchteinrichtungen 20 ausgetauscht werden können. Die Leuchteinrichtung 12, und hier insbesondere deren Beacon 16, dienen demnach zugleich auch als Einrichtung zum Weiterleiten von entsprechenden Daten von der Infrastruktureinrichtung 22 zu den Leuchteinrichtungen 20 und umgekehrt, zum Beispiel nach Art eines Netzwerkknotens.

Das vom Beacon 16 beziehungsweise den Beacons der Leuchteinrichtungen 20 jeweils ausgesendete Funksignal 18 kann von einem oder auch mehreren Kommunikationsendgeräten 34 empfangen und ausgewertet werden. Das Kommunikationsendgerät 34 ist vorliegend ein Mobilfunkendgerät nach Art eines Smartphones. In der vorliegenden Ausgestaltung ist vorgesehen, dass lediglich die Kommunikationsendgeräte 34 das Funksignal 18 empfangen und auswerten. Eine Kommunikation erfolgt deshalb nur unidirektional. Nicht dargestellte Beacons der weiteren Leuchteinrichtungen 20 können ebenfalls mit dem Kommunikationsendgerät 34 empfangen werden, sofern sie in Kommunikationsreichweite zum Kommunikationsendgerät 34 sind. Dadurch können mittels des Kommunikationsendgeräts 34 eine Reihe von Diensten zur Verfügung gestellt beziehungsweise ermöglicht werden, die es einem Nutzer des Kommunikationsendgeräts 34 ermöglichen, unterschiedlichste zusätzliche Dienste zu nutzen.

Innerhalb eines vorgegebenen Bereichs, in dem die Leuchteinrichtungen 12, 20 angeordnet sind und in dem das Funksignal 18 vom Kommunikationsendgerät 34 empfangen werden kann, kann sich der Nutzer des Kommunikationsendgeräts 34 damit besser orientieren beziehungsweise navigieren sowie auch andere lokale, insbesondere digitale, Dienste ausfindig machen und nutzen, wie zum Beispiel Apps, App-Funktionen, Google Maps, Lightify, Lichtsteuerung und/oder dergleichen. Das Beleuchtungssystem 10 mit den in den jeweiligen Leuchteinrichtungen 12, 20 angeordneten Beacon 16 ermöglicht für die vorgenannten Nutzerpotenziale ein Ortungsbeziehungsweise Orientierungssystem. Insbesondere ist es möglich, eine genaue Selbstortung des Kommunikationsendgerätes 34 bereitzustellen, wodurch Dienste nutzbar werden, wie etwa die Navigation oder die Bereitstellung von ortsspezifischen Informationen.

Ein Aspekt der Beacon-Technologie ist die Möglichkeit zur Konfiguration typischer Parameter, wie zum Beispiel eine Signalstärke und/oder ein Sendeintervall des Funksignals 18 des Beacon 16. Mit unterschiedlichen Konfigurationen können verschiedene Anwendungsszenarien individuell unterstützt werden. Wird zum Beispiel eine hohe Servicequalität, beispielsweise eine genaue Lokalisierung in kurzen Abständen, gewünscht, wie sie insbesondere bei einer Indoor-Navigation erforderlich ist, können vorzugsweise sehr kurze Sendeintervalle konfiguriert sein.

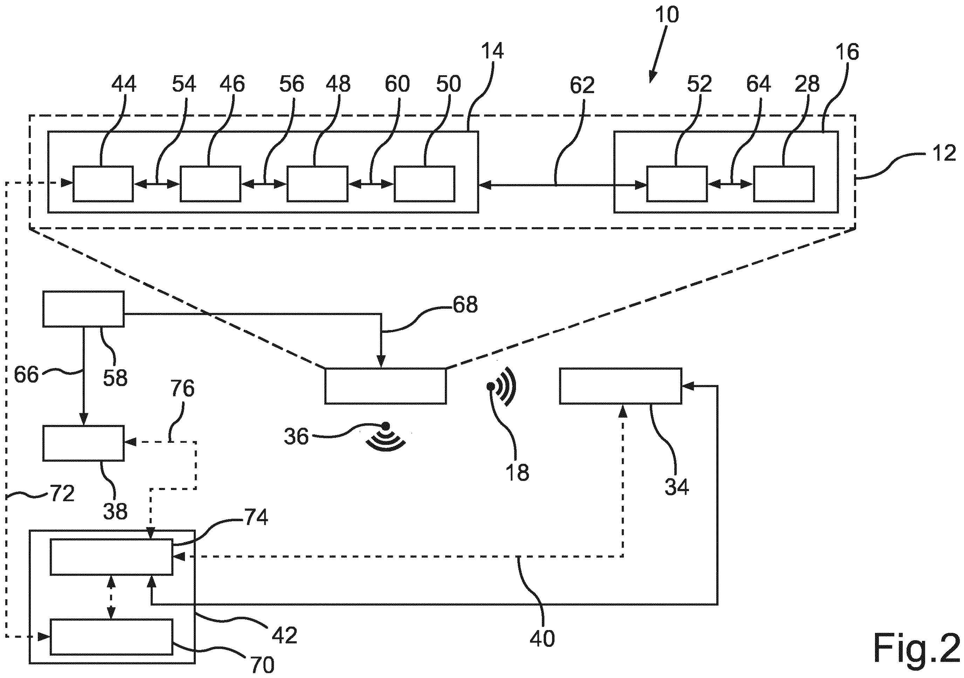

Fig. 2 zeigt in einer schematischen Blockdarstellung ein Beleuchtungssystem 10 gemäß der Erfindung, welches vorliegend in einem nicht weiter dargestellten Bürogebäude angeordnet ist. In Fig. 2 ist das Beleuchtungssystem 10 in einem Raum des Bürogebäudes angeordnet. Das Beleuchtungssystem 10 umfasst eine steuerbare Vorrichtung, die als technisches Infrastrukturelement vorliegend durch eine elektrisch antreibbare Jalousie 38 gebildet ist. Das Beleuchtungssystem 10 umfasst ferner eine vorliegend in einer Leuchteinrichtung 12 angeordnete Sendeeinrichtung, die durch einen Beacon 16 gebildet ist. Der Beacon 16 sendet ein Funksignal 18 mit für den Beacon 16 spezifischen Identifikationsdaten drahtlos nach Art von Nahfunk in den Raum als vorgegebenen Bereich aus. Die Jalousie 38 ist dem Beacon 16 zugeordnet. Das Funksignal 18 ist dem Grunde nach wie das Funksignal 18 gemäß Fig. 1 ausgebildet.

Die Leuchteinrichtung 12 umfasst vorliegend das Leuchtmittel 14, welches zusammen mit dem Beacon 16 in einer vergrößerten Darstellung im Detail in Fig. 2 im oberen Bereich dargestellt ist. Danach umfasst das Leuchtmittel 14 eine Einheit 44 zur Informationsverarbeitung und Lichtsteuerung, die über einen Energieübertragungskanal 54 an ein elektronisches Vorschaltgerät 46 angeschlossen ist. Das elektronische Vorschaltgerät 46 ist ferner über einen Energieübertragungskanal 56 an eine Energieschnittstelle 48 angeschlossen, die ihrerseits über einen Energieübertragungskanal 60 an ein Leuchtdiodenmodul 50 angeschlossen ist. Mittels des Leuchtdiodenmoduls 50 wird in vorgegebener Weise durch die Leuchteinrichtung 12 Licht 36 abgegeben.

Der Beacon 16 weist - wie bereits zur Fig. 1 erläutert - die Steuereinheit 28 auf, die vorliegend eine nicht dargestellte Funkeinheit umfasst, mittels der das Funksignal 18 in vorgegebener Weise abgegeben wird. Die Steuereinheit 28 ist zusammen mit der Funkeinheit über einen Energieübertragungskanal 64 an eine Energieschnittstelle 52 des Beacon 16 angeschlossen. Die Energieschnittstelle 52 ist ihrerseits über einen Energieübertragungskanal 62 unmittelbar an das Leuchtmittel 14 angeschlossen und wird von diesem mit elektrischer Energie für den bestimmungsgemäßen Betrieb des Beacon 16 versorgt. Vorliegend ist vorgesehen, dass eine unterbrechungsfreie Energieversorgung über die Leuchteinrichtung 12 für den Beacon 16 bereitgestellt ist.

Das Leuchtmittel 14 sowie auch der Beacon 16 sind in einem gemeinsamen Gehäuse (nicht dargestellt) der Leuchteinrichtung 12 angeordnet. Zum Zwecke der Energieversorgung der Leuchteinrichtung 12 ist diese über einen Energieübertragungskanal 68 an eine Netzversorgung 58 angeschlossen, die durch ein öffentliches Energieversorgungsnetz bereitgestellt wird. Die Netzversorgung 58 versorgt über einen Energieversorgungskanal 66 auch die Jalousie 38 mit elektrischer Energie für ihren bestimmungsgemäßen Betrieb.

Vorliegend ist vorgesehen, dass der Betrieb des Beacon 16 unabhängig von einem Betriebszustand des Leuchtmittels 14 ist und der Beacon 16 insbesondere auch dann mit elektrischer Energie über die Leuchteinrichtung 12 versorgt wird, wenn das Leuchtmittel 14 deaktiviert ist und kein Licht 36 emittiert wird. Dadurch kann der bestimmungsgemäße Betrieb des Beacon 16 unabhängig vom Betrieb des Leuchtmittels 14 realisiert werden.

In der vorliegenden Ausgestaltung ist vorgesehen, dass das Gebäude eine Gebäudemanagementeinrichtung 42 umfasst, die eine Lichtmanagementeinheit 70 umfasst. Die Lichtmanagementeinheit 70 ist über eine Kommunikationsschnittstelle 72 an die Einheit 44 zur Informationsverarbeitung und Lichtsteuerung des Leuchtmittels 14 angeschlossen und steuert hierdurch die Lichtabgabe des Leuchtmittels 14.

Die Gebäudemanagementeinrichtung 42 bildet unter anderem eine Steuerungszentrale und umfasst ferner eine zentrale Datenverarbeitung 74, die mit der Lichtmanagementeinheit 70 in Kommunikationsverbindung steht. Darüber hinaus besteht zwischen der zentralen Datenverarbeitung 74 und der Jalousie 38 eine Kommunikationsverbindung 76, über die Steuerbefehle für den bestimmungsgemäßen Betrieb der Jalousie 38 übermittelt werden können. Darüber hinaus können Betriebszustände der Jalousie 38 an die zentrale Datenverarbeitung 74 übermittelt werden.

Das Beleuchtungssystem 10 umfasst ferner ein Kommunikationsendgerät 34 zum Steuern der Jalousie 38, wobei das Kommunikationsendgerät 34 ausgebildet ist, das Funksignal 18 zu empfangen und auszuwerten, um die spezifischen Identifikationsdaten zu erfassen. Vorliegend ist das Kommunikationsendgerät 34 durch ein Smartphone gebildet. Das Kommunikationsendgerät 34 steht weiterhin vorliegend über eine Kommunikationsverbindung 40 mit der zentralen Datenverarbeitung 74 in Verbindung.

Das Beleuchtungssystem 10 umfasst ferner die zentrale Datenverarbeitung 74 als Ermittlungseinheit zum Ermitteln der Jalousie 38 als der dem Beacon 16 zugeordneten steuerbaren Vorrichtung anhand der erfassten spezifischen Identifikationsdaten, die aus dem Funksignal 18 gewonnen worden sind. Zu diesem Zweck übermittelt das Kommunikationsendgerät 34 das empfangene Funksignal über die Kommunikationsverbindung 40 an die zentrale Datenverarbeitung 74, die die Jalousie 38 als dem Beacon 16 zugeordnete steuerbare Vorrichtung ermittelt und entsprechende Daten über die Kommunikationsverbindung 40 an das Kommunikationsendgerät 34 rückübermittelt.

In einer alternativen Ausgestaltung kann an dieser Stelle auch vorgesehen sein, dass das Kommunikationsendgerät 34 selbst die Ermittlungseinheit umfasst und durch Abfrage über die Kommunikationsverbindung 40 an die zentrale Datenverarbeitung 74 die Jalousie 38 als der dem Beacon 16 zugeordnete steuerbare Vorrichtung ermittelt.

Zum Zwecke des Ermittelns der Jalousie 38 als der dem Beacon 16 zugeordnete steuerbare Vorrichtung können somit zentralisierte Kartendaten auf einem Server abgeglichen und eine eindeutige Position des Kommunikationsendgerätes 34 ermittelt werden.

Zum Steuern der Jalousie 38 werden nunmehr über die Kommunikationsverbindung 40 sowie die Kommunikationsverbindung 76 einem Steuerbefehl entsprechende Daten an die Jalousie 38 übermittelt, die dann eine entsprechende Steuerungsfunktion ausführt. Ist die Ermittlungseinheit vom Kommunikationsendgerät 34 umfasst, kann hierfür auch zunächst ein Herstellen der Kommunikationsverbindung 40 zur Jalousie 38 vorgesehen sein. Die Kommunikationsverbindung 40 ist vorzugsweise ebenfalls eine drahtlose Kommunikationsverbindung, insbesondere eine Funkverbindung, die beispielsweise über ein Mobilfunknetz oder auch ein Nahfunkkommunikationsnetzwerk, beispielsweise auf Basis von WLAN oder dergleichen ausgebildet sein kann.

In dieser Ausgestaltung umfasst das Ermitteln der Jalousie 38 als der dem Beacon 16 zugeordneten steuerbaren Vorrichtung ein Bereitstellen von Freigabedaten, die es dem Kommunikationsendgerät 34 erlauben, den Steuerbefehl an die Jalousie 38 abzugeben. Zu diesem Zweck ist vorliegend ferner vorgesehen, dass die Freigabedaten Positionsdaten für eine Position des Kommunikationsendgerätes 34 unter Nutzung der spezifischen Identifikationsdaten des Beacon 16 umfassen, wobei anhand der ermittelten Positionsdaten ermittelt wird, ob das Kommunikationsendgerät 34 im vorgegebenen Bereich positioniert ist. Nur wenn das Kommunikationsendgerät im vorgegebenen Bereich positioniert ist, kann das Kommunikationsendgerät 34 die dem Steuerbefehl entsprechenden Daten an die Jalousie 38 übermitteln. Zu diesem Zweck ist ferner vorgesehen, dass auf dem Kommunikationsendgerät 34 eine Anwendung beziehungsweise App installiert wird, die ein spezifisches Rechnerprogramm für eine Rechnereinheit des Kommunikationsendgeräts 34 umfasst. Mittels der Anwendung kann erreicht werden, dass die dem Steuerbefehl entsprechenden Daten nur dann an die Jalousie 38 übermittelt werden, wenn das Kommunikationsendgerät 34 im vorgegebenen Bereich positioniert ist. Dies wird durch eine Kommunikationsreichweite vorliegend bestimmt, die dadurch bestimmt ist, dass das Kommunikationsendgerät 34 das Funksignal 18 empfängt.

Auch wenn vorliegend vorgesehen ist, dass die Daten für den Steuerbefehl durch die zentrale Datenverarbeitung unmittelbar an die Jalousie 38 weitergeleitet werden, die zentrale Datenverarbeitung 74 somit vorliegend als Netzwerkknoten fungiert, kann in einer alternativen Ausgestaltung auch vorgesehen sein, dass die zentrale Datenverarbeitung 74 eine entsprechende Umsetzung vornimmt und die vom Kommunikationsendgerät 34 empfangenen Daten umsetzt, gegebenenfalls sogar einer weiteren Prüfung unterzieht, und spezifische Steuerdaten an die Jalousie 38 übermittelt.

Es erfolgt somit eine Positionsbestimmung des Kommunikationsendgerätes 34 innerhalb des Gebäudes vorzugsweise auf Basis von digitalen Layoutplänen, in denen Positionen der einzelnen Beacons 16 mit den entsprechenden spezifischen Identifikationsdaten innerhalb eines Service-Areals hinterlegt sind. Empfängt das Kommunikationsendgerät 34 ein oder mehrere Funksignale 18, kann nun dessen genaue Position im Gebäude ermittelt werden. Die Positionsgenauigkeit kann dabei von verschiedenen Faktoren, wie einer Anzahl an empfangenen Funksignalen, Auswertealgorithmen und dergleichen, abhängen. Abhängig von der ermittelten Position des Kommunikationsendgerätes 34 im Service-Areal, beispielsweise dem vorgegebenen Bereich, der hier durch einen Raum des Gebäudes gebildet ist, können auf dem Kommunikationsendgerät 34 die steuerbaren technischen Vorrichtungen, hier die Jalousie 38, im Umfeld angezeigt werden. Ein Zugriff auf die steuerbaren Vorrichtungen erfolgt vorliegend über das Kommunikationsendgerät 34 auf dem die entsprechende Anwendung beziehungsweise App für die zu bedienende Vorrichtung, hier die Jalousie 38, installiert ist.

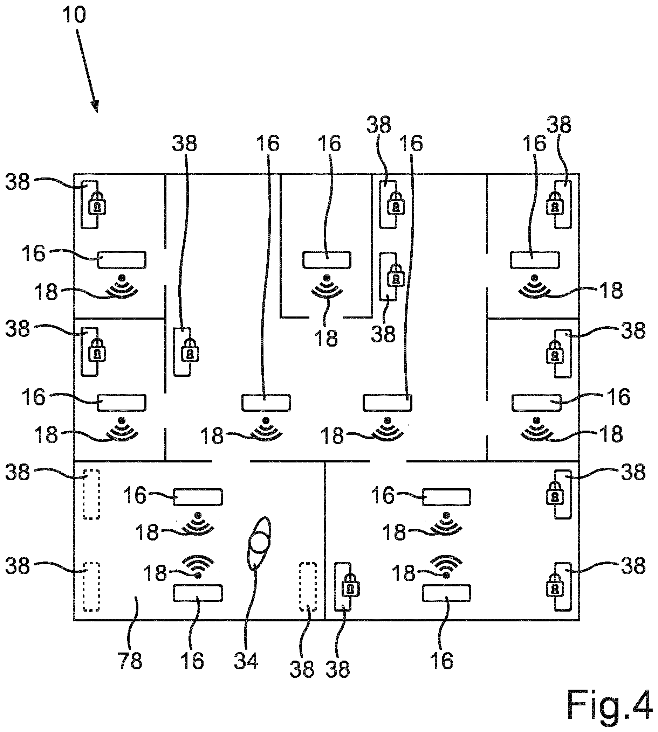

Fig. 4 zeigt in einer schematischen Darstellung eine Etage des Gebäudes, in dem das Beleuchtungssystem 10 angeordnet ist. Zu erkennen ist, dass eine Mehrzahl von Räumen vorgesehen sind, in denen Beacons 16 angeordnet sind, die jeweils spezifische Identifikationsdaten mittels jeweiliger Funksignale 18 aussenden. Darüber hinaus sind in den jeweiligen Räumen steuerbare Vorrichtungen 38 angeordnet, die mit dem zuvor beschriebenen Verfahren gesteuert werden können. Nicht dargestellt ist in Fig. 4 die Gebäudemanagementeinrichtung 42.

Die Beacon 16 sind vorliegend in jeweiligen Leuchteinrichtungen 12 (nicht dargestellt) angeordnet, wie dies bereits anhand der Figuren 1 und 2 erläutert worden ist. In einem der Räume, nämlich dem Raum 78, ist ein Nutzer mit seinem Kommunikationsendgerät 34, dem Smartphone, positioniert. Das Kommunikationsendgerät 34 empfängt zwei Funksignale 18 von zwei in dem Raum 78 angeordneten Beacons 16. Dadurch kann nun eine genaue Position des Kommunikationsendgerätes 34 ermittelt werden. Vorliegend befindet sich das Kommunikationsendgerät 34 im Raum 78 als vorgegebenen Bereich. In dem Raum 78 sind ferner nicht weiter spezifizierte steuerbare Vorrichtungen 38 angeordnet, die zum Beispiel eine Jalousie darstellen können. Darüber hinaus kann die steuerbare Vorrichtung 38 aber auch eine Heizbeziehungsweise Klimatisiereinrichtung sein. Erfindungsgemäß sind die steuerbaren Vorrichtungen 38 des Raums 78 mittels des Kommunikationsendgerätes 34 steuerbar. Insbesondere sind die steuerbaren Vorrichtungen 38 des Raums 78 den Beacons 16 des Raums 78 zugeordnet. Es ist vorliegend vorzugsweise eine raumweise Zuordnung vorgesehen.

In einem benachbarten der Räume, nämlich dem Raum 80, sind weitere steuerbare Vorrichtungen 38 angeordnet, die jedoch anderen Beacons 16 zugeordnet sind, nämlich den Beacons 16, die ebenfalls im Raum 80 angeordnet sind. Mittels des erfindungsgemäßen Verfahrens wird dies erkannt, sodass die steuerbaren Vorrichtungen 38 des Raums 80 durch das Kommunikationsendgerät 34, welches im Raum 78 angeordnet ist, nicht gesteuert werden können. Durch die Erfindung wird dies verhindert, wie bereits zuvor in Bezug auf Fig. 2 erläutert. In Fig. 4 sind die steuerbaren Vorrichtungen 38, die in der aktuell darstellten Position des Kommunikationsendgerätes 34 im Raum 78 nicht steuerbar sind, mit einem Schlosssymbol gekennzeichnet. Dies sind vorliegend die steuerbaren Vorrichtungen 38 außerhalb des Raums 78.

Es ist also vorgesehen, dass das Kommunikationsendgerät 34 aus den spezifischen Identifikationsdaten seine eigene Position innerhalb des Gebäudes bestimmt. Vorliegend befindet sich die eigene Position innerhalb des Raums 78. Zur Bestimmung der Position wird ein Layoutplan der Leuchteinrichtungen 12 benutzt, die die Beacons 16 enthalten, die jeweilige spezifische Identifikationsdaten umfassen. Aus einem Abgleich der empfangenen Funksignale 18 sowie einer Feldstärkemessung der Funksignale 18 kann auf diese Weise eine genaue Position ermittelt werden.

Das Kommunikationsendgerät 34 kommuniziert vorzugsweise mit der zentralen Datenverarbeitung 74, wobei sowohl eine leitungsgebundene als auch eine drahtlose Kommunikationsverbindung sowie Kombinationen hiervon möglich sind. Die zentrale Datenverarbeitung 74 authentifiziert einen Standort des Kommunikationsendgerätes 34 und leitet daraufhin die Steuerbefehle beziehungsweise die entsprechenden Daten an die entsprechenden steuerbaren Vorrichtungen wie der Jalousie 38 weiter. Als Kommunikationskanäle können hierbei abhängig von den steuerbaren Vorrichtungen wie der Jalousie 38 ebenfalls leitungsgebundene sowie auch drahtlose Kommunikationsverbindungen sowie Kombinationen hiervon genutzt werden.

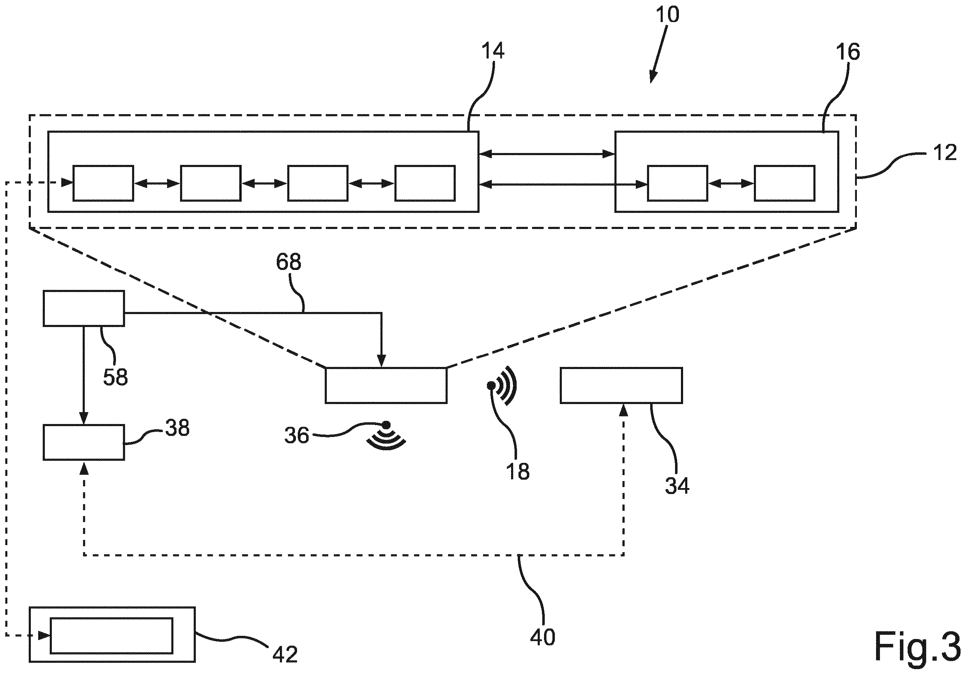

Fig. 3 zeigt eine weitere Ausgestaltung für ein Beleuchtungssystem 10, die nicht unter den Wortlaut der Ansprüche fällt, wobei diese Ausgestaltung auf der zuvor beschriebenen, gemäß Fig. 2 bereits erläuterten, Ausgestaltung für ein Beleuchtungssystem 10 basiert, weshalb ergänzend auf die diesbezüglichen Ausführungen verwiesen wird.

Im Unterschied zur Ausgestaltung gemäß Fig. 2 ist bei der Ausgestaltung gemäß Fig. 3 vorgesehen, dass das Kommunikationsendgerät 34 eine Kommunikationsverbindung 40 unmittelbar zur Jalousie 38 herstellt. Es ist hier also keine zentrale Datenverarbeitung mehr zwischengeschaltet. Vorzugsweise ist auch hier die Kommunikationsverbindung 40 drahtlos ausgebildet. Sie kann aber je nach Art des Kommunikationsendgeräts 34 auch leitungsgebunden sein oder auch durch eine Kombination hiervon gebildet sein.

Das Kommunikationsendgerät 34 kann in dieser Ausgestaltung aus den spezifischen Identifikationsdaten des Beacon 16 die eigene Position innerhalb des vorgegebenen Bereichs bestimmen. Zur Bestimmung der eigenen Position wird vorliegend wieder ein Layoutplan der Leuchteinrichtung 12 beziehungsweise der darin angeordneten Beacons 16 genutzt, in dem die jeweiligen spezifischen Identifikationsdaten der Beacon 16 der Leuchteinrichtungen 12, 20 hinterlegt sind. Aus einem Abgleich des Funksignals sowie einer Feldstärkemessung können auf diese Weise die Position und dadurch Positionsdaten ermittelt werden. Das Kommunikationsendgerät 34 kommuniziert also direkt mit der steuerbaren Vorrichtung, vorliegend der Jalousie 38. Hierbei erfolgt eine Authentifizierung des Standorts des Kommunikationsendgerätes 34 durch das Kommunikationsendgerät 34 selbst.

Die Ausführungsbeispiele dienen lediglich der Erläuterung der Erfindung und sollen diese nicht beschränken.

### BEZUGSZEICHENLISTE

- 10: Beleuchtungssystem
- 12: Beleuchtungseinrichtung
- 14: Leuchteinrichtung
- 16: Beacon
- 18: Funksignal
- 20: Beleuchtungseinrichtung
- 22: Infrastruktureinrichtung
- 24: Kommunikationsverbindung
- 26: Kommunikationsverbindung
- 28: Steuereinheit
- 30: Rechnereinheit
- 32: Speichereinheit
- 34: Kommunikationsendgerät
- 36: Licht
- 38: steuerbare Vorrichtung
- 40: Kommunikationsverbindung
- 42: Gebäudemanagementeinrichtung
- 44: Lichtsteuerung
- 46: Vorschaltgerät
- 48: Energieschnittstelle
- 50: Leuchtdiodenmodul
- 52: Energieschnittstelle
- 54: Energieübertragungskanal
- 56: Energieübertragungskanal
- 58: Netzversorgung
- 60: Beleuchtungseinrichtung
- 62: Energieübertragungskanal
- 64: Energieübertragungskanal
- 66: Energieversorgungskanal
- 68: Energieübertragungskanal
- 70: Lichtmanagementeinheit
- 72: Kommunikationsschnittstelle
- 74: zentrale Datenverarbeitung
- 76: Kommunikationsverbindung
- 78: Raum
- 80: Raum

## Patentansprüche

1. Verfahren zum Steuern von wenigstens einer in einem vorgegebenen Bereich angeordneten steuerbaren Vorrichtung (38) mittels eines Kommunikationsendgerätes (34), wobei eine Sendeeinrichtung (16) ein Funksignal (18) mit für die Sendeeinrichtung (16) spezifischen Identifikationsdaten drahtlos aussendet und wobei die Sendeeinrichtung (16) in oder unmittelbar an der Leuchteinrichtung (12) angeordnet ist, mit den Schritten:
- Zuordnen der wenigstens einen steuerbaren Vorrichtung (38) zu der Sendeeinrichtung (16),
- Empfangen des Funksignals mittels des Kommunikationsendgerätes (34),
- Auswerten des Funksignals zum Erfassen der spezifischen Identifikationsdaten,
- Ermitteln der wenigstens einen der Sendeeinrichtung (16) zugeordneten steuerbaren Vorrichtung (38) anhand der erfassten spezifischen Identifikationsdaten,
- Herstellen einer Kommunikationsverbindung zwischen der wenigstens einen Vorrichtung (38) und dem Kommunikationsendgerät (34) und
- Übermitteln von einem Steuerbefehl entsprechenden Daten zum Steuern der wenigstens einen Vorrichtung (38) und/oder der Sendeeinrichtung (16) selbst, wobei das Herstellen der Kommunikationsverbindung umfasst, dass die Kommunikationsverbindung wenigstens über eine Steuerungszentrale (42) hergestellt wird, wobei die wenigstens eine steuerbare Vorrichtung (38) automatisiert eine Kommunikationsverbindung zu der Sendeeinrichtung (16) herstellt, wodurch die steuerbare Vorrichtung (38) der Sendeeinrichtung (16) zugeordnet wird.

2. Verfahren nach Anspruch 1,
**dadurch gekennzeichnet, dass**
das Ermitteln ein Bereitstellen von Freigabedaten umfasst, die es der steuerbaren Vorrichtung (38) erlauben, den Steuerbefehl des Kommunikationsendgerätes (34) auszuführen, und/der dem Kommunikationsendgerät (34) erlauben, den Steuerbefehl an die steuerbare Vorrichtung (38) abzugeben.

3. Verfahren nach Anspruch 2,
**dadurch gekennzeichnet, dass**
das Ermitteln der Freigabedaten umfasst, dass Positionsdaten für eine Position des Kommunikationsendgeräts (34) wenigstens unter Nutzung der spezifischen Identifikationsdaten der Sendeeinrichtung (16) ermittelt werden und anhand der ermittelten Positionsdaten ermittelt wird, ob das Kommunikationsendgeräts (34) im vorgegebenen Bereich positioniert ist.

4. Verfahren nach einem der vorhergehenden Ansprüche,
**dadurch gekennzeichnet, dass**
das Ermitteln ein Installieren eines spezifischen Rechnerprogramms für eine Rechnereinheit des Kommunikationsendgeräts (34) umfasst.

5. Verfahren nach einem der vorhergehenden Ansprüche,
**dadurch gekennzeichnet, dass**
das Ermitteln einen Abgleich mit einer Datenbank umfasst, die Daten wenigstens bezüglich der Leuchteinrichtung (12), der wenigstens einen steuerbaren Vorrichtung (38) und dem vorgegebenen Bereich enthält.

6. Verfahren nach einem der vorhergehenden Ansprüche,
**dadurch gekennzeichnet, dass**
das Herstellen der Kommunikationsverbindung ein Herstellen einer Kommunikationsverbindung zu der Steuerungszentrale (42) umfasst, wobei die wenigstens eine steuerbare Vorrichtung (38) über die Steuerungszentrale (42) gesteuert wird.

7. Verfahren nach einem der vorhergehenden Ansprüche,
**dadurch gekennzeichnet, dass**
zum Zwecke eines Authentifizierens der Position des Kommunikationsendgeräts (34) die Positionsdaten mit dem vorgegebenen Bereich abgeglichen werden und die Daten zum Steuern nur dann an die wenigstens eine steuerbare Vorrichtung (38) übermittelt werden und/oder die steuerbare Vorrichtung (38) nur dann den den Daten zum Steuern entsprechenden Steuerbefehl ausführt, wenn die Position des Kommunikationsendgeräts (34) authentifiziert ist.

8. Verfahren nach einem der Ansprüche 2 bis 7,
**dadurch gekennzeichnet, dass**
die Freigabedaten eine Berechtigungsinformation umfassen, wobei die Berechtigungsinformation spezifisch für ein einzelnes vorgegebenes Kommunikationsendgerät (34) oder für eine vorgegebene Gruppe von Kommunikationsendgeräten (34) ist.

9. Verfahren nach einem der vorhergehenden Ansprüche,
**dadurch gekennzeichnet, dass**
die Sendeeinrichtung (16) zumindest teilweise über die Leuchteinrichtung (12) mit elektrischer Energie für ihren bestimmungsgemäßen Betrieb, vorzugsweise unabhängig von einem bestimmungsgemäßen Betrieb der Leuchteinrichtung (12), versorgt wird.

10. Verfahren nach einem der vorhergehenden Ansprüche,
**dadurch gekennzeichnet, dass**
zum Steuern der wenigstens einen steuerbaren Vorrichtung (38) ein dem Kommunikationsendgerät (34) zugeordnetes Einstellungsprofil genutzt wird.

11. Verfahren nach Anspruch 10,
**dadurch gekennzeichnet, dass**
das Steuern der wenigstens einen steuerbaren Vorrichtung (38) automatisiert gemäß dem Einstellungsprofil erfolgt, sobald das Kommunikationsendgerät (34) das Funksignal (18) empfängt.

12. Verfahren nach Anspruch 10 oder 11,
**dadurch gekennzeichnet, dass**
das Steuern der wenigstens einen steuerbaren Vorrichtung (38) automatisiert ein Einnehmen einer Initialeinstellung umfasst, wenn das Kommunikationsendgerät (34) außerhalb einer Empfangsreichweite in Bezug auf das Funksignal (18) ist.

13. Verfahren nach einem der vorhergehenden Ansprüche,
**dadurch gekennzeichnet, dass**
das Steuern auch ein Steuern der Sendeeinrichtung (16) umfasst.

14. Verfahren nach einem der vorhergehenden Ansprüche,
**dadurch gekennzeichnet, dass**
das Steuern der wenigstens einen Vorrichtung (38) zumindest teilweise automatisiert auf Basis von wenigstens einem geeigneten Parameter erfolgt.

15. Verfahren nach einem der vorhergehenden Ansprüche,
**dadurch gekennzeichnet, dass**,
wenn das Kommunikationsendgerät (34) das Funksignal (18) empfängt, Aktualisierungen für Rechnerprogramme vorgeschlagen werden.

16. Verfahren nach Anspruch 15,
**dadurch gekennzeichnet, dass**
das Aktualisieren automatisiert ausgeführt wird, sobald das Kommunikationsendgerät (34) in Kommunikationsreichweite zur Sendeeinrichtung (16) gelangt.

17. System (10) zum Steuern von wenigstens einer in einem vorgegebenen Bereich angeordneten steuerbaren Vorrichtung (38), mit:
- der steuerbaren Vorrichtung (38),
- einer Sendeeinrichtung (16), die ein Funksignal (18) mit für die Sendeeinrichtung (16) spezifischen Identifikationsdaten drahtlos aussendet, wobei die wenigstens eine steuerbare Vorrichtung (38) der Sendeeinrichtung (16) zugeordnet ist, wobei die Sendeeinrichtung (16) in oder unmittelbar an der Leuchteinrichtung (12) angeordnet ist,
- einem Kommunikationsendgerät (34) zum Steuern der steuerbaren Vorrichtung (38) und/oder der Sendeeinrichtung (16) selbst, wobei das Kommunikationsendgerät (34) ausgebildet ist, das Funksignal zu empfangen und zum Erfassen der spezifischen Identifikationsdaten auszuwerten,
- einer Ermittlungseinheit (40) zum Ermitteln der wenigstens einen der Sendeeinrichtung (16) zugeordneten steuerbaren Vorrichtung (38) anhand der erfassten spezifischen Identifikationsdaten,
- wobei eine Kommunikationsverbindung zwischen der wenigstens einen Vorrichtung (38) und dem Kommunikationsendgerät (34) herstellbar ist, um einem Steuerbefehl entsprechende Daten zum Steuern der wenigstens einen steuerbaren Vorrichtung (38) zu übermitteln, wobei das Herstellen der Kommunikationsverbindung das Herstellen wenigstens über eine Steuerungszentrale (42) umfasst, wobei die wenigstens eine steuerbare Vorrichtung (38) dazu ausgebilet ist automatisiert eine Kommunikationsverbindung zu der Sendeeinrichtung (16) herzustellen, wodurch die steuerbare Vorrichtung (38) der Sendeeinrichtung (16) zugeordnet wird.

## Claims

1. Method for controlling at least one controllable device (38) arranged in a predetermined area by means of a communication terminal (34), wherein a transmitting device (16) wirelessly transmits a radio signal (18) with identification data specific to the transmitting device (16) and wherein the transmitting device (16) is arranged in or directly on the lighting device (12), having the steps:
- assigning the at least one controllable device (38) to the transmitting device (16),
- receiving the radio signal by means of the communication terminal (34),
- evaluating the radio signal to detect the specific identification data,
- determining the at least one controllable device (38) associated with the transmitting device (16) on the basis of the specific identification data acquired,
- establishing a communication link between the at least one device (38) and the communication terminal (34), and
- transmitting data corresponding to a control command for controlling the at least one device (38) and/or the transmitting device (16) itself, wherein establishing the communication link comprises establishing the communication link at least via a control center (42), wherein the at least one controllable device (38) automatically establishes a communication link to the transmitting device (16), whereby the controllable device (38) is associated with the transmitting device (16).

2. Method according to claim 1, **characterized in that** the determining comprises providing enabling data allowing the controllable device (38) to execute the control command of the communication terminal (34) and/or allowing the communication terminal (34) to issue the control command to the controllable device (38).

3. Method according to claim 2, **characterized in that** determining the enable data comprises determining position data for a position of the communication terminal (34) at least using the specific identification data of the transmitting device (16), and determining whether the communication terminal (34) is positioned in the predetermined range based on the determined position data.

4. Method according to one of the preceding claims, **characterized in that**
the determining comprises installing a specific computer program for a computer unit of the communication terminal (34).

5. Method according to any one of the preceding claims, **characterized in that**
the determining comprises matching with a database containing data at least relating to the lighting device (12), the at least one controllable device (38) and the predetermined area.

6. Method according to any one of the preceding claims, **characterized in that**
establishing the communication link comprises establishing a communication link to the control center (42), wherein the at least one controllable device
(38) is controlled via the control center (42).

7. Method according to any one of the preceding claims, **characterized in that**
for the purpose of authenticating the position of the communication terminal (34), the position data are compared with the predetermined range and the data for controlling are transmitted to the at least one controllable device (38) and/or the controllable device (38) executes the control command corresponding to the data for controlling only if the position of the communication terminal (34) is authenticated.

8. Method according to any one of claims 2 to 7, **characterized in that**
the enabling data comprises authorization information, the authorization information being specific to a single predetermined communication terminal (34) or to a predetermined group of communication terminals (34).

9. Method according to any one of the preceding claims, **characterized in that**
the transmitting device (16) is at least partially supplied with electrical energy via the lighting device (12) for its intended operation, preferably independently of an intended operation of the lighting device (12).

10. Method according to one of the preceding claims, **characterized in that**
a setting profile associated with the communication terminal (34) is used for controlling the at least one controllable device (38).

11. Method according to claim 10, **characterized in that**
the control of the at least one controllable device (38) is automated according to the setting profile as soon as the communication terminal (34) receives the radio signal (18).

12. Method according to claim 10 or 11, **characterized in that**
the controlling of the at least one controllable device (38) comprises automatically adopting an initial setting when the communication terminal (34) is out of a reception range with respect to the radio signal (18).

13. Method according to any one of the preceding claims,
**characterized in that**
the controlling also comprises controlling the transmitting device (16) .

14. Method according to any one of the preceding claims,
**characterized in that**
the controlling of the at least one device (38) is at least partially automated based on at least one suitable parameter.

15. Method according to any one of the preceding claims,
**characterized in that**,
when the communication terminal (34) receives the radio signal (18), updates for computer programs are proposed.

16. Method according to claim 15, **characterized in that**
the updating is performed automatically as soon as the communication terminal (34) comes within communication range of the transmitting device (16).

17. System (10) for controlling at least one controllable device (38) located in a predetermined area, comprising:
- the controllable device (38),
- a transmitting device (16) that wirelessly transmits a radio signal (18) with identification data specific to the transmitting device (16), the at least one controllable device (38) being associated with the transmitting device (16), wherein the transmitting device (16) is arranged in or directly on the lighting device (12)
- a communication terminal (34) for controlling said controllable device (38) and/or said transmitting device (16) itself, the communication terminal (34) being designed to receive the radio signal and to evaluate it for the purpose of acquiring the specific identification data
- a determination unit (40) for determining the at least one controllable device (38) associated with the transmitting device (16) on the basis of the specific identification data acquired,
- wherein a communication link is establishable between the at least one device (38) and the communication terminal (34) to transmit data corresponding to a control command for controlling the at least one controllable device (38), wherein establishing the communication link comprises establishing it at least via a control center (42), wherein the at least one controllable device (38) is adapted to automatically establish a communication link to the transmitting device (16), thereby associating the controllable device (38) with the transmitting device (16).

## Revendications

1. Procédé de commande d'au moins un dispositif commandable (38) disposé dans une zone prédéterminée au moyen d'un terminal de communication (34), dans lequel un dispositif émetteur (16) transmet sans fil un signal radio (18) avec des données d'identification propres à l'émetteur dispositif d'éclairage (16) et dans lequel le dispositif de transmission (16) est agencé dans ou directement sur le dispositif d'éclairage (12), avec les étapes :
- affecter le au moins un dispositif commandable (38) au dispositif émetteur (16),
- recevoir le signal radio au moyen de la borne de communication (34),
- évaluer du signal radio pour enregistrer les données d'identification spécifiques,
- déterminer le au moins un dispositif commandable (38) affecté au dispositif émetteur (16) sur la base des données d'identification spécifiques enregistrées,
- établir une connexion de communication entre le au moins un dispositif (38) et le terminal de communication (34) et
- transmettre de données correspondant à une commande de contrôle du au moins un dispositif (38) et/ou du dispositif émetteur (16) lui-même, l'établissement du lien de communication comprenant que le lien de communication est établi au moins via un centre de contrôle ( 42), le au moins un dispositif contrôlable (38) établit automatiquement une liaison de communication avec le dispositif émetteur (16), le dispositif contrôlable (38) étant associé au dispositif émetteur (16) .

2. Procédé selon la revendication 1, **caractérisé en ce que** la détermination comprend la fourniture de données de libération qui permettent au dispositif contrôlable (38) d'exécuter la commande de contrôle du terminal de communication (34) et/qui permettent au terminal de communication (34) d'émettre la commande de contrôle au dispositif contrôlable (38).

3. Procédé selon la revendication 2, **caractérisé en ce que** la détermination des données de libération comprend la détermination des données de position pour une position du terminal de communication (34) au moins en utilisant les données d'identification spécifiques du dispositif de transmission (16) et en utilisant les données de position déterminées pour déterminer si le terminal de communication (34) est positionné dans la zone spécifiée.

4. Procédé selon l'une quelconque des revendications précédentes, **caractérisé en ce que**
la détermination comprend l'installation d'un programme informatique spécifique pour une unité informatique du terminal de communication (34) .

5. Procédé selon l'une quelconque des revendications précédentes, **caractérisé en ce que**
la détermination comprend une comparaison avec une base de données contenant des données concernant au moins le dispositif d'éclairage (12), le au moins un dispositif contrôlable (38) et la zone prédéterminée.

6. Procédé selon l'une quelconque des revendications précédentes, **caractérisé en ce que**
l'établissement de la liaison de communication comprend l'établissement d'une liaison de communication vers le centre de contrôle (42), dans lequel le au moins un dispositif contrôlable (38) est commandé via le centre de commande (42).

7. Procédé selon l'une quelconque des revendications précédentes, **caractérisé en ce que**
dans le but d'authentifier la position du terminal de communication (34), les données de position sont comparées avec la zone spécifiée et les données de contrôle ne sont transmises qu'ensuite au au moins un dispositif contrôlable (38) et/ou au dispositif contrôlable ( 38) ne transmet alors la den Data to control que la commande de contrôle correspondante lorsque la position du terminal de communication (34) est authentifiée.

8. Procédé selon l'une quelconque des revendications 2 à 7,
**caractérisé en ce que**
les données de libération comprennent des informations d'autorisation, les informations d'autorisation étant spécifiques à un terminal de communication spécifié individuel (34) ou à un groupe spécifié de terminaux de communication (34).

9. Procédé selon l'une quelconque des revendications précédentes, **caractérisé en ce que**
le dispositif émetteur (16) est au moins partiellement alimenté en énergie électrique via le dispositif d'éclairage (12) pour son fonctionnement prévu, de préférence indépendamment du fonctionnement prévu du dispositif d'éclairage (12).

10. Procédé selon l'une quelconque des revendications précédentes, **caractérisé en ce que**
un profil de réglage attribué au terminal de communication (34) est utilisé pour commander le au moins un dispositif commandable (38).

11. Procédé selon la revendication 10, **caractérisé en ce que**
le au moins un dispositif commandable (38) est commandé automatiquement selon le profil de réglage dès que le terminal de communication (34) reçoit le signal radio (18).

12. Procédé selon la revendication 10 ou 11, **caractérisé en ce que**
la commande du au moins un dispositif commandable (38) comprend automatiquement l'adoption d'un réglage initial lorsque le terminal de communication (34) est hors d'une plage de réception par rapport au signal radio (18).

13. Procédé selon l'une quelconque des revendications précédentes, **caractérisé en ce que**
la commande comprend également la commande du dispositif de transmission (16).

14. Procédé selon l'une quelconque des revendications précédentes, **caractérisé en ce que**
le au moins un dispositif (38) est commandé au moins partiellement automatiquement sur la base d'au moins un paramètre approprié.

15. Procédé selon l'une quelconque des revendications précédentes, **caractérisé en ce que**,
lorsque le terminal de communication (34) reçoit le signal radio (18), des mises à jour de programmes informatiques sont proposées.

16. Procédé selon la revendication 15, **caractérisé en ce que**
la mise à jour est effectuée automatiquement dès que le terminal de communication (34) arrive à portée de communication du dispositif émetteur (16).

17. Système (10) pour contrôler au moins un dispositif contrôlable (38) situé dans une zone prédéterminée, comprenant :
- le dispositif commandable (38),
- un dispositif de transmission (16) qui transmet sans fil un signal radio (18) avec des données d'identification propres au dispositif de transmission (16), le au moins un dispositif commandable (38) étant affecté au dispositif de transmission (16), le dispositif de transmission (16) étant dans ou étant disposé directement sur le dispositif d'éclairage (12),
- un terminal de communication (34) pour commander le dispositif commandable (38) et/ou le dispositif émetteur (16) lui-même, le terminal de communication (34) étant agencé pour recevoir le signal radio et l'évaluer afin d'enregistrer l'identification spécifique données,
- une unité de détermination (40) pour déterminer le au moins un dispositif commandable (38) affecté au dispositif émetteur (16) sur la base des données d'identification spécifiques enregistrées,
- dans lequel une connexion de communication peut être établie entre le au moins un dispositif (38) et le terminal de communication (34) afin de transmettre des données correspondant à une commande de contrôle pour contrôler le au moins un dispositif contrôlable (38), l'établissement du connexion de communication étant établie au moins via un centre de contrôle (42), dans lequel le au moins un dispositif contrôlable (38) est conçu pour établir automatiquement une connexion de communication avec le dispositif de transmission (16), le dispositif contrôlable (38) étant affecté à le dispositif de transmission (16)
